(19) Europäisches Patentamt
European Patent Office
Office européen des brevets

(11) **EP 4 398 221 A1**

(12) **EUROPEAN PATENT APPLICATION**
published in accordance with Art. 153(4) EPC

(43) Date of publication:
**10.07.2024 Bulletin 2024/28**

(51) International Patent Classification (IPC):
***G09B 15/00*** *(2006.01)*  ***G10G 1/00*** *(2006.01)*
***G10H 1/00*** *(2006.01)*

(21) Application number: **22863909.2**

(52) Cooperative Patent Classification (CPC):
**G09B 15/00; G10G 1/00; G10H 1/00**

(22) Date of filing: **23.03.2022**

(86) International application number:
**PCT/JP2022/013344**

(87) International publication number:
**WO 2023/032319 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 JP 2021141494**

(71) Applicant: **Sony Group Corporation
Tokyo
108-0075 (JP)**

(72) Inventors:
  • **OKU, Takanori**
    **Tokyo 141-0022 (JP)**
  • **NISHIMURA, Yu**
    **Tokyo 141-0022 (JP)**

  • **NISHIOKA, Hayato**
    **Tokyo 141-0022 (JP)**
  • **FURUYA, Shinichi**
    **Tokyo 141-0022 (JP)**
  • **UEMATSU, Yukako**
    **Tokyo 108-0075 (JP)**
  • **SAKATA, Junichirou**
    **Tokyo 108-0075 (JP)**
  • **SUZUKI, Takaharu**
    **Tokyo 113-0001 (JP)**
  • **BAN, Reigo**
    **Tokyo 112-0002 (JP)**
  • **NAKABAYASHI, Ryo**
    **Tokyo 116-0002 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND INFORMATION PROCESSING SYSTEM**

(57)    An information processing device (2) includes an acquisition unit (22) that acquires detection results of a plurality of sensors (1) that detects skill acquisition operation, and a processing unit (24) that processes the detection results of the plurality of sensors (1) which results are acquired by the acquisition unit (22). The plurality of sensors (1) includes a main sensor (11) that detects a state of a main operation target in the skill acquisition operation, and the processing by the processing unit (24) includes extracting a plurality of pieces of information in the skill acquisition operation on the basis of a detection result of the main sensor (11), calculating feature amounts acquired from the detection results of the plurality of sensors (1) in a generation period of each of the plurality of pieces of extracted information, and generating data (23b) in which the detection results of the plurality of sensors and the calculated feature amounts are organized and described for each of the plurality of pieces of extracted information.

FIG.8

INFORMATION PROCESSING DEVICE (2)

USER INTERFACE UNIT (21)

ACQUISITION UNIT (22)

PROCESSING UNIT (24)

STORAGE UNIT (23)

APPLICATION PROGRAM (23a)

DATA (23b)

REFERENCE DATA (23c)

EP 4 398 221 A1

**Description**

Field

The present disclosure relates to an information processing device, an information processing method, and an information processing system.

Background

Various proposals related to skill acquisition support have been made. For example, Patent Literature 1 proposes a method of supporting improvement in music performance skill.

Citation List

Patent Literature

Patent Literature 1: Japanese Patent Application Laid-open No. 2019-61006

Summary

Technical Problem

By using various sensors, it is possible to acquire a large amount information related to skill acquisition operation. On the other hand, there is still room for considering how to organize and utilize a large amount of information.
One aspect of the present disclosure makes it possible to organize and make it easier to utilize information useful for skill acquisition support.

Solution to Problem

According to one aspect of the present disclosure, an information processing device inclludes: an acquisition unit that acquires detection results of a plurality of sensors that detects skill acquisition operation; and a processing unit that process the detection results of the plurality of sensors which results are acquired by the acquisition unit, wherein the plurality of sensors includes a main sensor that detects a state of a main operation target in the skill acquisition operation, and the processing by the processing unit includes extracting a plurality of pieces of information in the skill acquisition operation on a basis of a detection result of the main sensor, calculating a feature amount acquired from the detection results of the plurality of sensors in a generation period of each of the plurality of pieces of extracted information, and generating data in which the detection results of the plurality of sensors and the calculated feature amounts are organized and described for each of the plurality of pieces of extracted information.
According to one aspect of the present disclosure, an information processing method includes: acquiring detection results of a plurality of sensors that detects skill acquisition operation; and processing the acquired detection results of the plurality of sensors, wherein the plurality of sensors includes a main sensor that detects a state of a main operation target in the skill acquisition operation, and the processing includes extracting a plurality of pieces of information in the skill acquisition operation on a basis of a detection result of the main sensor, calculating feature amounts acquired from the detection results of the plurality of sensors in a generation period of each of the plurality of pieces of extracted information, and generating data in which the detection results of the plurality of sensors and the calculated feature amounts are organized and described for each of the plurality of pieces of extracted information.
According to one aspect of the present disclosure, an information processing system includes: a plurality of sensors that detects skill acquisition operation, and an information processing device that processes detection results of the plurality of sensors, wherein the plurality of sensors includes a main sensor that detects a state of a main operation target in the skill acquisition operation, and the processing by the information processing device includes extracting a plurality of pieces of information in the skill acquisition operation on a basis of a detection result of the main sensor, calculating feature amounts acquired from the detection results of the plurality of sensors in a generation period of each of the plurality of pieces of extracted information, and generating data in which the detection results of the plurality of sensors and the calculated feature amounts are organized and described for each of the plurality of pieces of extracted information.

Brief Description of Drawings

FIG. 1 is a view illustrating an example of a schematic configuration of an information processing system according to an embodiment.

FIG. 2 is a view illustrating an example of a plurality of sensors.

FIG. 3 is a view schematically illustrating an example of a detection result of a sensor.

FIG. 4 is a view schematically illustrating an example of a detection result of a sensor.

FIG. 5 is a view schematically illustrating an example of a detection result of a sensor.

FIG. 6 is a view schematically illustrating an example of a detection result of a sensor.

FIG. 7 is a view schematically illustrating an example of a detection result of a sensor.

FIG. 8 is a view illustrating an example of a schematic configuration of an information processing device.

FIG. 9 is a view schematically illustrating an example of extraction of onset and offset.

FIG. 10 is a view schematically illustrating an example of note.

FIG. 11 is a view schematically illustrating examples of chord and phrase.

FIG. 12 is a view illustrating an example of a feature amount of a single sound.

FIG. 13 is a view illustrating an example of a feature amount of a single sound.

FIG. 14 is a view illustrating an example of a feature amount of a chord.

FIG. 15 is a view illustrating an example of a feature amount of continuous sounds.

FIG. 16 is a view illustrating an example of extraction of a chord.

FIG. 17 is a view illustrating an example of extraction of a chord.

FIG. 18 is a view illustrating an example of extraction of continuous sounds.

FIG. 19 is a view illustrating an example of extraction of continuous sounds.

FIG. 20 is a view illustrating an example of extraction of continuous sounds.

FIG. 21 is a view illustrating an example of extraction of continuous sounds.

FIG. 22 is a view illustrating an example of data.

FIG. 23 is a view illustrating an example of a feature amount that may be presented as useful information.

FIG. 24 is a view schematically illustrating an example of Touch interval.

FIG. 25 is a view schematically illustrating an example of Legato.

FIG. 26 is a view schematically illustrating an example of Touch-pedal release interval.

FIG. 27 is a view illustrating an example of a user interface.

FIG. 28 is a view illustrating an example of a user interface.

FIG. 29 is a view illustrating an example of the user interface.

FIG. 30 is a view illustrating an example of the user interface.

FIG. 31 is a view illustrating an example of the user interface.

FIG. 32 is a view illustrating an example of the user interface.

FIG. 33 is a view illustrating an example of the user interface.

FIG. 34 is a view illustrating an example of the user interface.

FIG. 35 is a view illustrating an example of the user interface.

FIG. 36 is a view illustrating an example of the user interface.

FIG. 37 is a view illustrating an example of the user interface.

FIG. 38 is a view illustrating an example of the user interface.

FIG. 39 is a flowchart illustrating an example of processing (information processing method) executed in the information processing system.

FIG. 40 is a view illustrating a hardware configuration example of the information processing device.

Description of Embodiments

In the following, embodiments of the present disclosure will be described in detail on the basis of the drawings. Unless otherwise specified, overlapped description is omitted by assignment of the same reference sign to the same elements.

The present disclosure will be described in the following order of items.

1. Embodiment

2. Modification example

3. Examples of effects

1. Embodiment

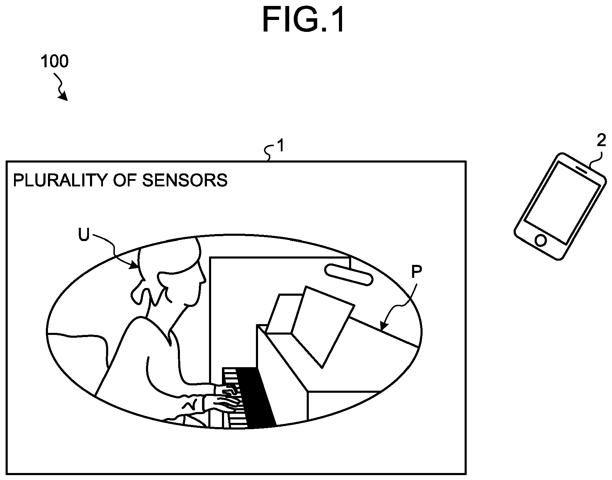

FIG. 1 is a view illustrating an example of a schematic configuration of an information processing system according to an embodiment. A user of the information processing system 100 is referred to as a user U in the drawing. The information processing system 100 includes a plurality of sensors 1, and an information processing device 2. Detection results of the plurality of sensors 1 are acquired by the information processing device 2 as, for example, time-series data and processed.

The plurality of sensors 1 detects skill acquisition operation of the user U. The skill acquisition operation may include operation of an operation target. The skill acquisition operation of an example is music performance, and is more specifically piano performance. The operation target is a piano played by the user U and is referred to as a piano P in the drawing.

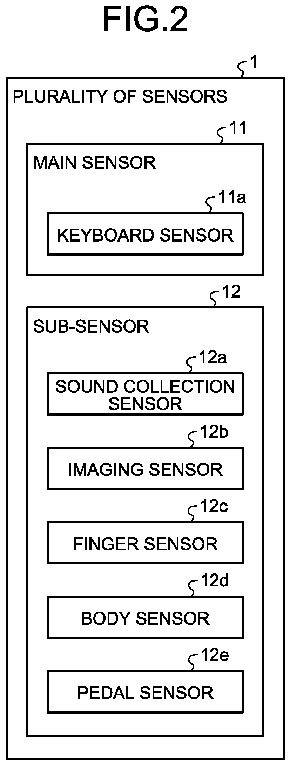

FIG. 2 is a view illustrating an example of a plurality of sensors. The plurality of sensors 1 includes a main sensor 11 and a sub-sensor 12.

The main sensor 11 is a sensor that detects a state of a main operation target in piano performance. In this example, the main sensor 11 is a keyboard sensor 11a, and detects a movement amount of each key of a keyboard (each keyboard key) of the piano P. A state of the main operation target in the piano performance is the movement amount of each keyboard key. A detection result of the keyboard sensor 11a is also referred to as "keyboard movement amount data".

The sub-sensor 12 is a sensor other than the main sensor 11. In this example, the sub-sensor 12 includes a sound collection sensor 12a, an imaging sensor 12b, a finger sensor 12c, a body sensor 12d, and a pedal sensor 12e.

The sound collection sensor 12a collects sound of the piano P. A detection result of the sound collection sensor 12a is also referred to as "sound data".

The imaging sensor 12b images the user U and the piano P. A detection result of the imaging sensor 12b is also referred to as "image data". Imaging may have a meaning including photographing, and imaging data may have a meaning including video data.

The finger sensor 12c and the body sensor 12d detect a state of a body of the user U. The finger sensor 12c detects a state of fingers of the body of the user U. The body sensor 12d detects a state of portions other than the fingers of the body of the user U, such as an elbow, a shoulder, a head, a back, a waist, a leg, and the like. Examples of the state include a position, an angle (including a joint angle), and the like. A detection result of the finger sensor 12c is also referred to as "finger data". A detection result of the body sensor 12d is also referred to as "body data".

The pedal sensor 12e detects a movement amount of each pedal of the piano P. A detection result of the pedal sensor is also referred to as "pedal movement amount data".

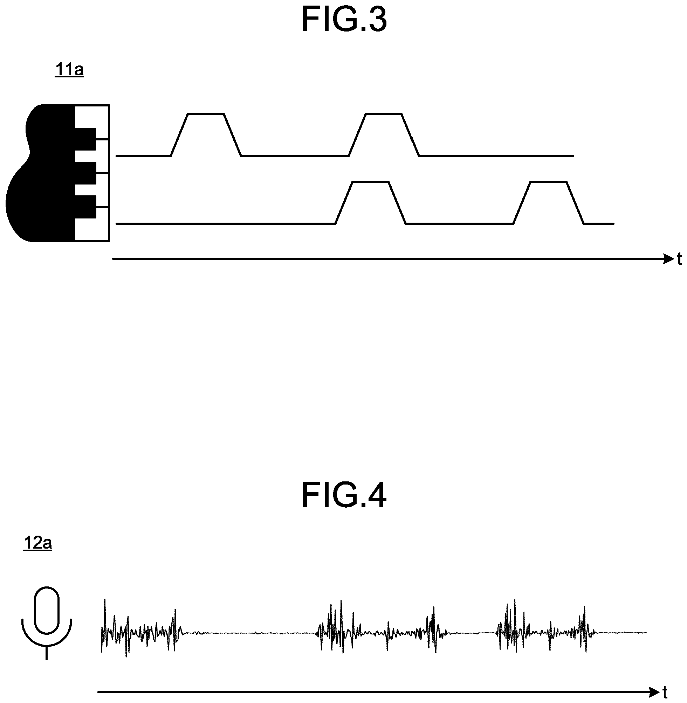

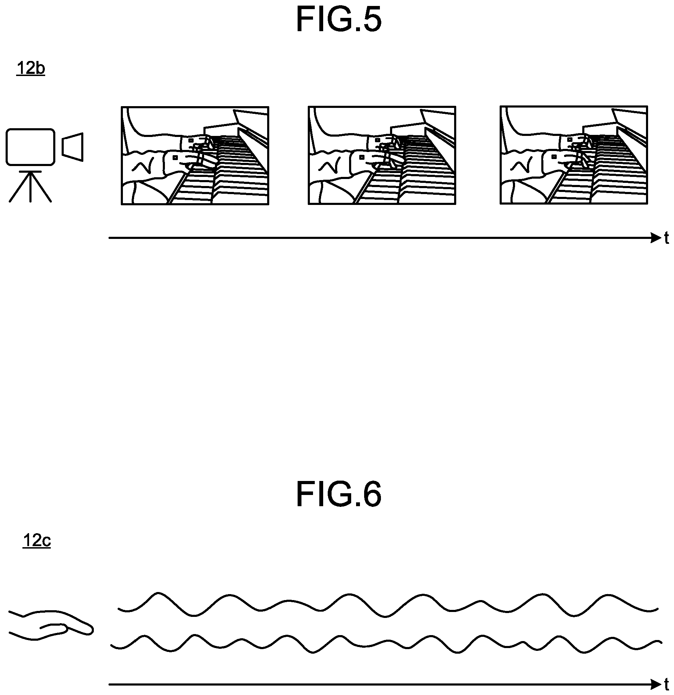

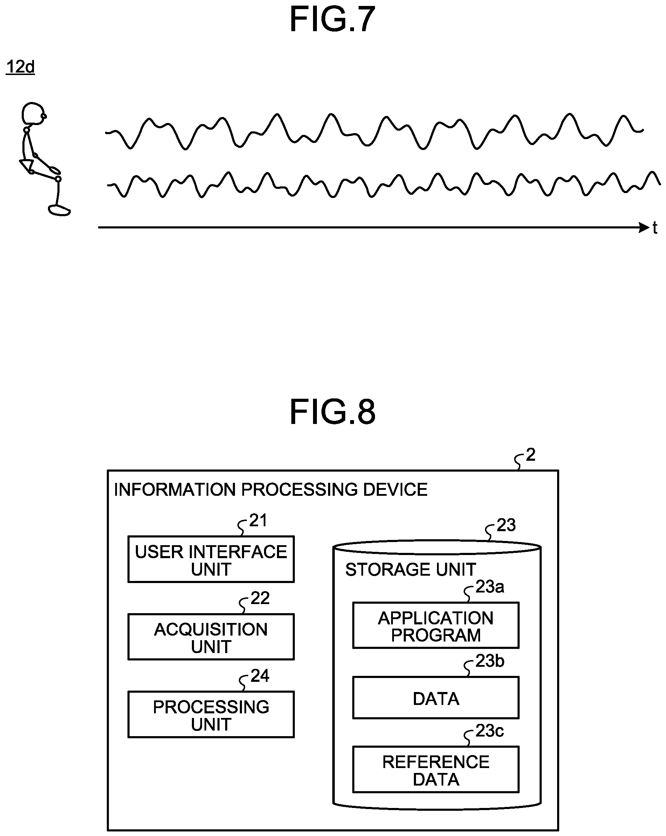

FIG. 3 to FIG. 7 are views schematically illustrating examples of the detection results of the sensors. Each of the example detection results is time-series data and may change with time t. The detection result (keyboard movement amount data) of the keyboard sensor 11a is schematically illustrated in FIG. 3. The detection result (acoustic data) of the sound collection sensor 12a is schematically illustrated in FIG. 4. The detection result (image data) of the imaging sensor 12b is schematically illustrated in FIG. 5. The detection result (finger data) of the finger sensor 12c is schematically illustrated in FIG. 6. The detection result (body data) of the body sensor 12d is schematically illustrated in FIG. 7.

Returning to FIG. 1, the detection results of the plurality of sensors 1 are transmitted to the information processing device 2 and processed by the information processing device 2. The information processing device 2 of an example is a tablet terminal. However, the information processing device 2 may be a device other than the tablet terminal, such as a PC, a smartphone terminal, or the like.

FIG. 8 is a view illustrating an example of a schematic configuration of the information processing device. The information processing device 2 includes a user interface unit 21, an acquisition unit 22, a storage unit 23, and a processing unit 24.

The user interface unit 21 presents information to the user U and receives operation (user operation) on the information processing device 2 by the user U. The user interface unit 21 includes, for example, a touch panel display, a microphone, a speaker, and the like.

The acquisition unit 22 acquires the detection results of the plurality of sensors 1. For example, the detection results of the plurality of sensors 1 are transmitted from the plurality of sensors 1 to the information processing device 2 via a network (not illustrated), and are acquired by the acquisition unit 22.

The storage unit 23 stores various kinds of information used in the information processing device 2. Examples of the information stored in the storage unit 23 include an application program 23a, data 23b, and reference data 23c. Although details will be described later, the application program 23a provides an application (program or software) executed by the processing unit 24. The data 23b is data generated by the storage unit 23. The reference data 23c is data compared with the data 23b.

The processing unit 24 executes various kinds of processing. The processing may include control of the user interface unit 21, the acquisition unit 22, and the storage unit 23, and the processing unit 24 may also function as a control unit that controls the information processing device 2.

The processing unit 24 executes an application to support improvement in piano performance skill (skill acquisition). An example of the application is a piano performance lesson, and is performed by execution of the application program 23a stored in the storage unit 23. For example, the user interface unit 21 presents lesson information including information of a target piece (such as a set piece) of the lesson. The user U plays the piano P in accordance with the presented lesson information. The piano performance is detected by the plurality of sensors 1 as described above.

The processing unit 24 processes the detection results of the plurality of sensors 1 which results are acquired by the acquisition unit 22. Some examples of the specific processing will be described.

The processing unit 24 executes preprocessing. An example of the preprocessing is filtering processing such as a noise removal. For example, the detection result of the keyboard sensor 11a is filtered.

The processing unit 24 extracts (detects, for example) a plurality of pieces of information in the piano performance on the basis of the detection result of the keyboard sensor 11a. Examples of the information are single motion information, simultaneous motion information, and continuous motion information. In the piano performance, an example of a single motion is a key stroke of one keyboard key, and an example of the single motion information is a single sound. An example of simultaneous motions is simultaneous key strokes of a plurality of keyboard keys, and an example of the simultaneous motion information is a chord. An example of continuous motions is continuous key strokes of a plurality of keyboard keys, and an example of the continuous motion information is continuous sounds.

Extraction of the single sound will be described. The processing unit 24 extracts the single sound by extracting a key stroke timing and a key release timing. For example, the processing unit 24 extracts, as the key stroke timing, timing at which the keyboard movement amount starts increasing from zero. The processing unit 24 extracts, as the key release timing, timing at which the keyboard movement amount becomes zero from a value other than zero. The key stroke timing is also referred to as "onset". The key release timing is also referred to as "offset". The onset and the offset may be specified by a value corresponding to time (such as a counter value of sampling). The onset and the offset may function as time stamps.

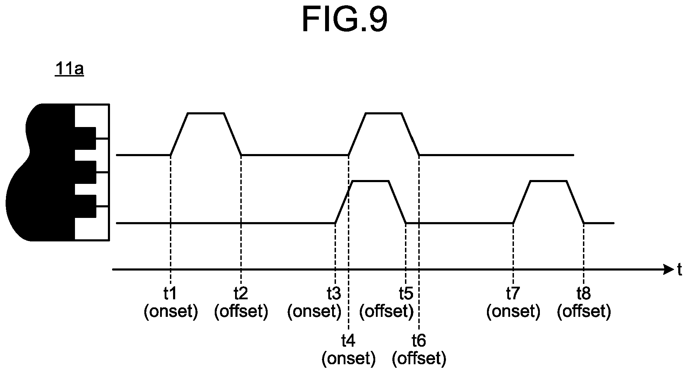

FIG. 9 is a view schematically illustrating an example of extraction of onset and offset. The keyboard movement amount of each of two keyboard keys is schematically illustrated. Time t1 is set as onset with respect to an upper keyboard key. Time t2 is extracted as offset. Time t4 is extracted as onset. Time t6 is extracted as offset. Time t3 is extracted as onset with respect to a lower keyboard key. Time t5 is extracted as offset. Time t7 is extracted as onset. Time t8 is extracted as offset.

A period from onset to offset of one key stroke defines a generation period of a single sound. Each of a period from the time t1 to the time t2, a period from the time t3 to the time t5, a period from the time t4 to the time t6, and a period from the time t7 to the time t8 corresponds to the generation period of the single sound.

The processing unit 24 segments the keyboard movement amount data for each single sound on the basis of onset and offset of the extracted single sound. Furthermore, the processing unit 24 calculates a feature amount (described later) acquired from the keyboard sensor 11a among feature amounts of the single sound.

The processing unit 24 generates a data packet of the single sound on the basis of the segmented keyboard movement amount data and the calculated feature amount of the single sound. The data packet of the single sound is also referred to as "note".

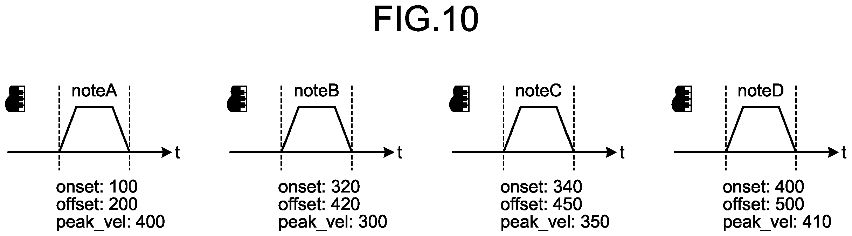

FIG. 10 is a view schematically illustrating an example of the note. Four pieces of the note are illustrated as examples. The pieces of note are referred to as noteA, noteB, noteC, and noteD in the drawing in such a manner as to be distinguished. Here, onset, offset, and peak_vel are illustrated as examples of information included in the note. peak_vel is an example of a feature amount of the single sound, which amount is acquired from the keyboard sensor 11a, and is a maximum value of keyboard movement velocity. The keyboard movement velocity is a time change in the keyboard movement amount, and is acquired by, for example, differentiation of the keyboard movement amount with time t. The processing unit 24 calculates the maximum value of the keyboard movement velocity between onset and offset of one single sound as peak_vel of the single sound.

Although not illustrated in FIG. 10, the note includes various feature amounts other than peak_vel, and also includes a detection result of each sensor.

The processing unit 24 extracts a chord and continuous sounds on the basis of the keyboard movement amount data in the generation period of each of the plurality of extracted single sounds. An extraction method of the chord and continuous sounds will be described later.

Generation periods of the chord and the continuous sounds are also defined by onset and offset, similarly to the generation period of the single sound. Among onset and offset of each of a plurality of single sounds included in the chord, the earliest onset and the latest offset are onset and offset of the chord. Among onset and offset of each of a plurality of single sounds included in the continuous sounds, the earliest onset and the latest offset are onset and offset of the continuous sounds.

The processing unit 24 calculates a feature amount (described later) acquired from the keyboard sensor 11a among feature amounts of the chord and the continuous sounds. An example of the feature amounts of the chord and the continuous sounds which amounts are acquired from the keyboard sensor 11a is uniformity of the keyboard movement velocity, and is also referred to as "vel_uniformity". For example, the processing unit 24 calculates vel_uniformity in such a manner that a value of vel_uniformity becomes larger as the uniformity of the keyboard movement velocity of the plurality of single sounds included in the chord or the continuous sounds becomes higher. For example, a value acquired by subtraction of a value acquired by division of a standard deviation of the keyboard movement velocity of the single sounds by an average value (0 to 1) from 1 may be calculated as vel_uniformity.

The processing unit 24 generates a data packet of the chord on the basis of the note of each of the plurality of single sounds included in the chord and the calculated feature amount of the chord. A data packet of the chord is also referred to as "chord". Similarly, the processing unit 24 generates a data packet of the continuous sounds on the basis of note of each of the plurality of single sounds included in the continuous sounds and the calculated feature amount of the continuous sounds. A data packet of the continuous sounds is also referred to as "phrase".

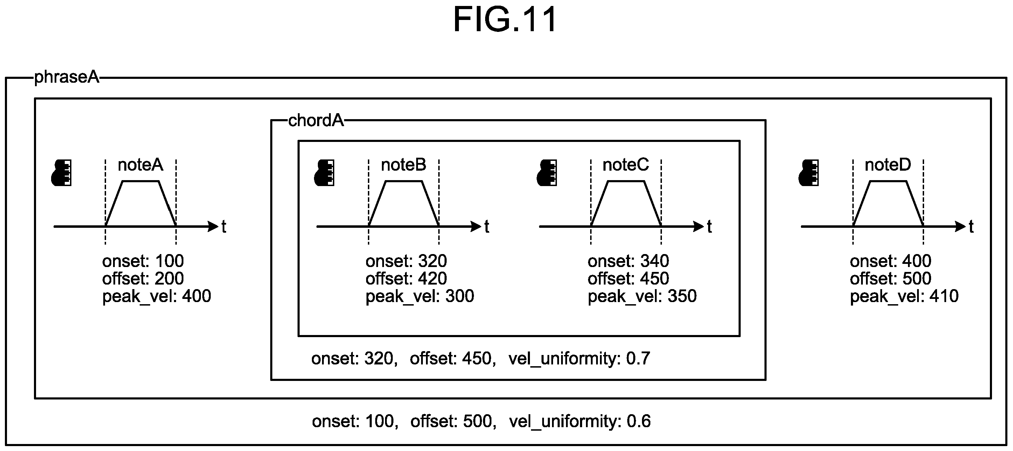

FIG. 11 is a view schematically illustrating examples of the chord and the phrase. The examples of the chord and the phrase are referred to as chordA and phraseA in the drawing.

The chordA includes the noteB and the noteC. The chordA is a data packet of a chord including a single sound of the noteB and a single sound of the noteC. Examples of other information included in the chordA include onset, offset, and vel uniformity of the chordA.

The phraseA includes the noteA, the noteB and the noteC (chordA), and the noteD. The phraseA is a data packet of continuous sounds including a single sound of the noteA, the single sound of the noteB and the single sound of the noteC (chord of the chordA), and a single sound of the noteD. Examples of other information included in the phraseA include onset, offset, and vel uniformity of the phraseA.

Although not illustrated in FIG. 11, the chord and the phrase include feature amounts other than peak uniformity. Since each of the note, the chord, and the phrase includes onset and offset, the generation period of each of the single sound, the chord, and the continuous sounds is defined by common timestamps.

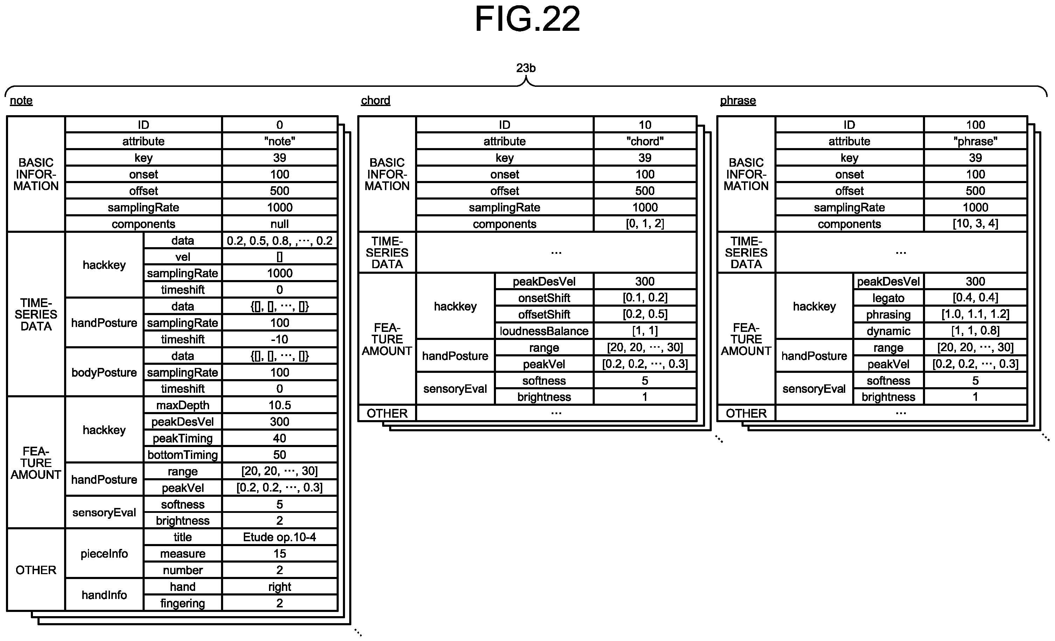

The processing unit 24 also segments a detection result of the sub-sensor 12 for each of the extracted single sound, chord, and continuous sounds. By using the onset and the offset as the time stamps, such segmentation is possible. The processing unit 24 also calculates a feature amount acquired from the detection result of the sub-sensor 12 in the generation period of each of the extracted single sound, chord, and continuous sounds. Some examples of the feature amount acquired from the detection result of the sub-sensor 12 will be described later with reference to FIG. 22.

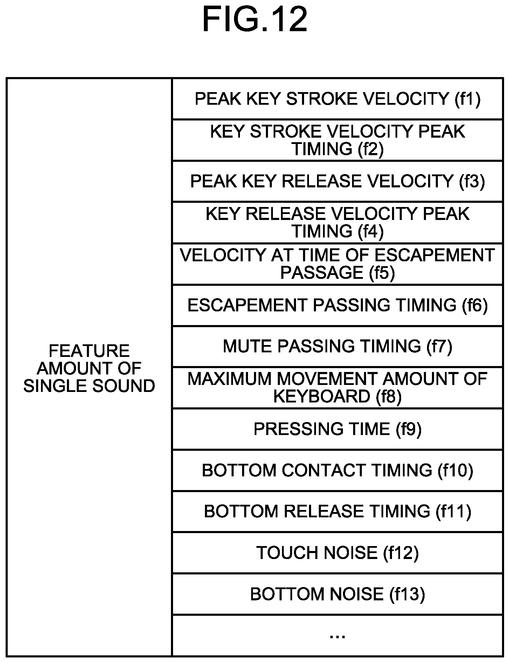

The feature amounts acquired from the detection result of the keyboard sensor 11a, and extraction of the chord and the continuous sounds will be described again with reference to FIG. 12 to FIG. 21.

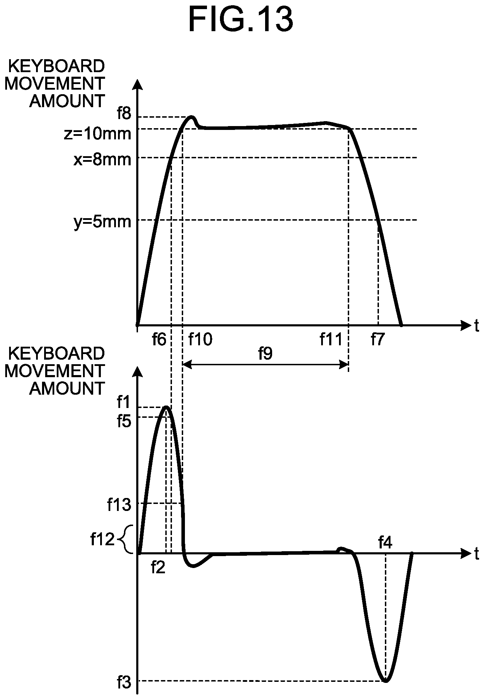

FIG. 12 and FIG. 13 are views illustrating examples of the feature amounts of the single sound. As the feature amounts of the single sound, "peak key stroke velocity", "key stroke velocity peak timing", "peak key release velocity", "key release velocity peak timing", "velocity at the time of escapement passage", "escapement passing timing", "mute passing timing", a "maximum movement amount of a keyboard", "pressing time", "bottom contact timing", "bottom release timing", "touch noise", and "bottom noise" are illustrated as the examples in FIG. 12. These feature amounts are schematically illustrated as a feature amount f1 to a feature amount f13 in FIG. 13.

The "peak key stroke velocity" (f1) is a feature amount related to volume, and can be used to grasp problems such as sound being too large and sound being too small. For example, the processing unit 24 calculates the maximum value of the keyboard movement velocity during the key stroke (at the time of key stroke) as the peak key stroke velocity.

The "key stroke velocity peak timing" (f2) is a feature amount related to a rise of sound, and can be used to grasp a problem such that each piece of the sound cannot be clearly heard or the sound is insufficient. For example, the processing unit 24 calculates timing at which the keyboard movement velocity reaches the peak key stroke velocity as the key stroke velocity peak timing.

The "peak key release velocity" (f3) is a feature amount related to a degree of sound separation (whether sound quickly disappears or gradually disappears), and can be used to grasp a problem such that the sound cannot be clearly heard. For example, the processing unit 24 calculates the maximum value of the keyboard movement velocity during key release (at the time of key release) as the peak key release velocity.

The "key release velocity peak timing" (f4) is a feature amount related to the degree of sound separation, and can be used to grasp a problem such that the sound cannot be clearly heard. For example, the processing unit 24 calculates timing at which the keyboard movement velocity reaches the peak key release velocity as the key release velocity peak timing.

The "velocity at the time of escapement passage" (f5) is a feature amount related to volume, and can be used to grasp problems such that the sound is too large and the sound is too small. For example, the processing unit 24 calculates the movement velocity of when the keyboard passes through a keyboard depth x during a key stroke as the velocity at the time of escapement passage. The keyboard depth x is a keyboard depth at which the keyboard passes through an escapement mechanism, and is based on a physical characteristic of a piano mechanism. In the example illustrated in FIG. 13, the keyboard depth x is 8 mm.

The "escapement passing timing" (f6) is a feature amount related to a rise of sound, and can be used to grasp problems such that each sound cannot be heard clearly and that the sound is insufficient. For example, the processing unit 24 calculates the timing at which a keyboard passes through the keyboard depth x as the escapement passing timing.

The "mute passing timing" (f7) is a feature amount related to timing of sound attenuation, and can be used to grasp a problem such that the sound cannot be clearly heard. For example, the processing unit 24 calculates timing at which a keyboard passes through a keyboard depth y during the key release as the mute passing timing. The keyboard depth y is a keyboard depth at which a damper descends and touches a string, and is based on a physical characteristic of the piano mechanism. In the example illustrated in FIG. 13, the keyboard depth y is 5 mm.

The "maximum movement amount of a keyboard" (f8) is a feature amount related to heaviness of sound, and can be used to grasp a problem such that the sound is too light or too heavy. For example, the processing unit 24 calculates the maximum value of the keyboard movement amount as the maximum movement amount of the keyboard.

The "pressing time" (f9) is a feature amount related to unnecessary strain, and can be used to grasp a problem such as fatigue caused by excessive force. For example, the processing unit 24 calculates, as the pressing time, time (period) during which the keyboard movement amount exceeds a keyboard depth z during the key stroke. The keyboard depth z is a keyboard depth at which the keyboard collides with the bottom, and is based on the physical characteristic of the piano mechanism. In the example illustrated in FIG. 13, the keyboard depth z is 10 mm.

"Grounding timing" (f10) is a feature amount related to a rise of sound, and can be used to grasp a problem such that each sound cannot be heard clearly or the sound is insufficient. For example, the processing unit 24 calculates, as the grounding timing, timing at which the keyboard movement amount exceeds the keyboard depth z during the key stroke.

The "bottom release timing" (f11) is a feature amount related to timing of the sound separation, and can be used to grasp a problem such that the sound cannot be clearly heard. For example, the processing unit 24 calculates, as resistance release timing, timing at which the keyboard movement amount falls below the keyboard depth z during the key release.

The "touch noise" (f12) is a feature amount related to hardness and softness (heaviness and lightness) of sound, and can be used to grasp a problem such that the sound is hard. For example, the processing unit 24 calculates, as the touch noise, the keyboard movement velocity at a moment at which the keyboard starts moving

The "bottom noise" (f13) is a feature amount related to hardness and softness of sound, and can be used to grasp a problem such that the sound is hard. For example, the processing unit 24 calculates, as the bottom noise, the keyboard movement velocity at timing at which the keyboard movement amount exceeds the keyboard depth z during the key stroke.

The above-described feature amounts of the single sound are merely examples, and another feature amount may also be calculated. Examples of the other feature amount include keyboard movement acceleration, and the like. The keyboard movement acceleration is a time change in the keyboard movement velocity, and is acquired by, for example, differentiation of the keyboard movement velocity with the time t.

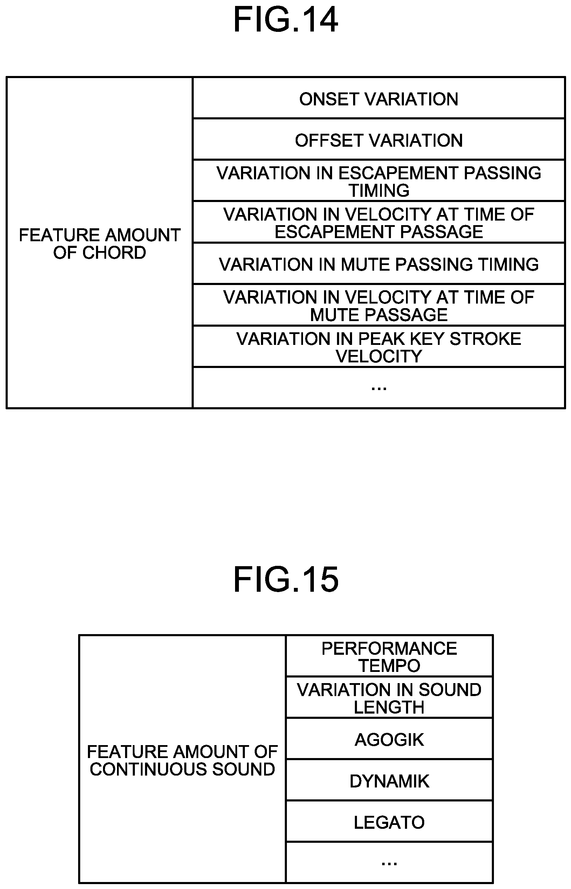

FIG. 14 is a view illustrating examples of a feature amount of the chord. The feature amount of the chord is, for example, a feature amount related to variation (such as deviation and nonuniformity) in feature amounts of a plurality of single sounds included in the chord. It is possible to grasp a problem such that pieces of sound are not uniform, sound of the chord is bad, pieces of the sound are not uniform, and the chord sounds disorganized. The feature amount is calculated on the basis of, for example, a standard deviation or the like. An "onset variation", an "offset variation", a "variation in escapement passing timing", a "variation in velocity at the time of escapement passage", a "variation in mute passing timing", a "variation in velocity at the time of mute passage", and a "variation in peak key stroke velocity" are illustrated as examples of the feature amounts of the chord in FIG. 14.

FIG. 15 is a view illustrating examples of a feature amount of the continuous sounds. The feature amount of the continuous sounds is, for example, a feature amount related to variation or nonuniformity in feature amounts of a plurality of single sounds included in the continuous sounds. Examples of the feature amount of the continuous sounds include a "performance tempo", "variation in a tone", "agogik", "dynamik", and "legato".

The "performance tempo" can be used to grasp a problem such that the sound is too fast to hear. For example, the processing unit 24 calculates, as the performance tempo, an average value of intervals in the escapement passing timing of the plurality of single sounds included in the continuous sounds.

"Variation in a sound length" can be used to grasp a problem such that lines are not connected. For example, the processing unit 24 calculates, as the variation in the sound length, variation in sound production time (time acquired by subtraction of the escapement passing timing from the mute passing timing) of the plurality of single sounds included in the continuous sounds.

"Agogik" is a feature amount related to phrasing or fluctuation of rhythm (way of pausing), and can be used to grasp a problem such that rhythm is heard in a broken manner. For example, the processing unit 24 calculates, as agogik, transition of the intervals of the escapement passing timing of the plurality of single sounds included in the continuous sound.

"Dynamik" is a feature amount related to expression of intensity and fluctuation (change) of volume, and can be used to grasp a problem such as not being able to hear all sounds or a sound having irregular volume. For example, the processing unit 24 calculates the transition of the velocity at the time of escapement passage of each of a plurality of single sounds included in the continuous sounds as the dynamik.

"Legato" is a feature amount related to an overlap of sounds and smoothness of a tone row, and can be used to grasp a problem such that a line cannot be drawn with sound. For example, the processing unit 24 calculates, as legato, an overlap between the mute passing timing and the escapement passing timing of the plurality of single sounds included in the continuous sounds.

For example, the feature amount of each of the single sound, the chord, and the continuous sounds as described above is calculated by the processing unit 24. The calculated feature amount can be used to support improvement of piano performance skill, for example.

As described above, the chord and the continuous sounds including the plurality of single sounds are extracted by the processing unit 24. For example, the processing unit 24 extracts the chord and the continuous sounds on the basis of the detection result of the keyboard sensor 11a in the generation period of each of the plurality of extracted single sounds. Some examples of extraction of the chord and the continuous sounds will be described.

The processing unit 24 may extract the chord by template matching with correct answer data of the chord, or may extract the continuous sounds by template matching with correct answer data of the continuous sounds. The template matching may be performed in units of note (for each single sound). Examples of the correct answer data include a set piece, a piece performed by a professional, and the like, and are provided by the application program 23a, for example.

The processing unit 24 may extract the chord and the continuous sounds by using a learned model. The learned model may be trained by utilization of training data in such a manner as to output data structured as the chord or the phrase when performance data such as keyboard movement amount data or acoustic data, or a row of note is input. The learned model is stored in the storage unit 23, for example.

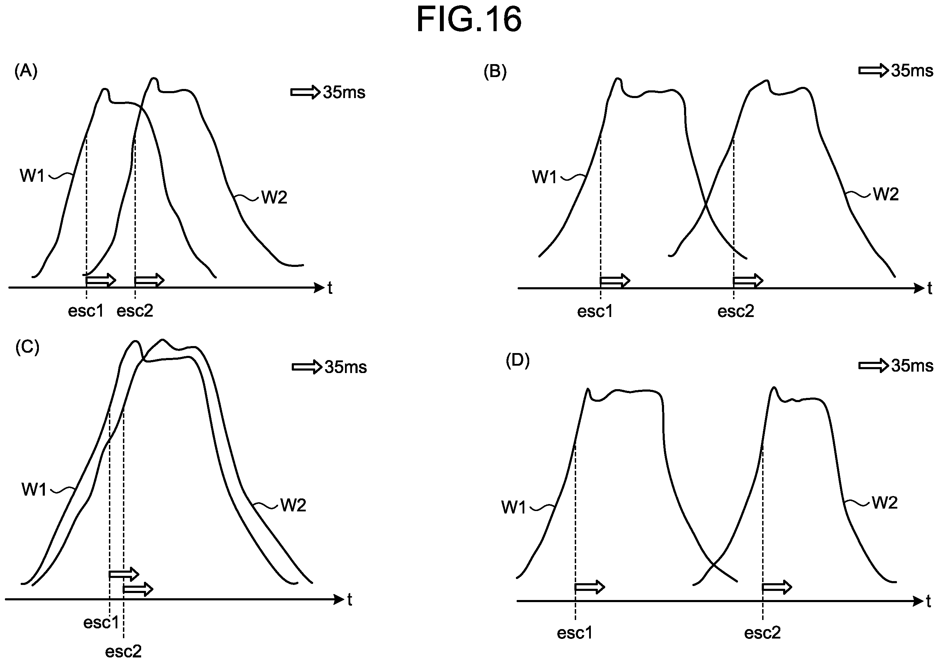

The processing unit 24 may extract the chord and the continuous sounds on the basis of a comparison result of the keyboard movement amount data of the plurality of extracted single sounds. The chord and the continuous sounds may be extracted on the basis of the feature amount of each of the single sounds. Description will be made with reference to FIG. 16 to FIG. 21.

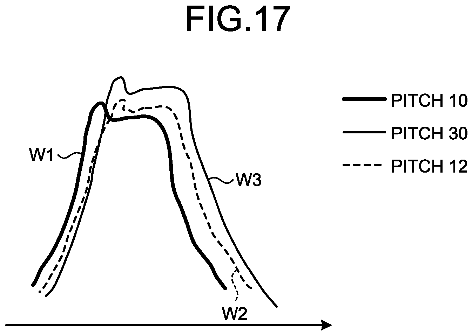

FIG. 16 and FIG. 17 are views illustrating examples of extraction of the chord. In this example, escape passage timing among the feature amounts of the single sound is used.

Waveforms of two single sounds in which at least a part of waveforms of the keyboard movement amounts overlaps are illustrated as examples in each of (A) to (D) of FIG. 16. (Waveforms of) each single sound is referred to as a single sound W1 and a single sound W2 in the drawings. The escapement passing timing of the single sound W1 and that of the single sound W2 are respectively referred to as timing esc1 and timing esc2 in the drawings.

For example, in a case where both of the following expression (1) and expression (2) are satisfied, the processing unit 24 detects the single sound W1 and the single sound W2 as the chord. 35 ms in the expressions is an example of a threshold.

$$esc1 + 35ms > esc2 \qquad \cdots (1)$$

$$esc2 + 35ms > esc1 \qquad \cdots (2)$$

Among (A) to (D) of FIG. 16, (C) of FIG. 16 satisfies both of the expressions (1) and (2). The processing unit 24 extracts the single sound W1 and the single sound W2 illustrated in (C) of FIG. 16 as the chord.

However, single sounds with pitches (such as MIDI pitch) being distant for a certain degree are not necessarily extracted as the chord. This is because single sounds with distant pitches are single sounds by key strokes with different hands that are a right hand and a left hand and there is a high possibility that the single sounds are not included in the chord. For example, the processing unit 24 may extract the chord in a manner illustrated in FIG. 16 described above after excluding the single sound having the pitch distant for the certain degree from chord candidates. Exclusion from the chord candidates will be described with reference to FIG. 17.

In FIG. 17, three single sounds are illustrated as examples together with pitches. The single sounds are respectively referred to as a single sound W1 to a single sound W3 in the drawing. The pitches of the single sound W1, the single sound W2, and the single sound W3 are 10, 30, and 12. The escapement passing timing of the single sound W1 to the single sound W3 is referred to as timing esc1 to timing esc3 in the drawing.

For example, the processing unit 24 excludes, from the chord candidates, a single sound a pitch of which is distant from those of other single sounds among single sounds pitches of which are distant for a threshold or more. An example of the threshold is 17. In this example, the pitch (= 10) of the single sound W1 and the pitch (= 30) of the single sound W3 are distant from each other for the threshold 17 or more, and the pitch of the single sound W3 is distant from the pitch of the single sound W2 more than the pitch of the single sound W1. The acquisition unit 22 excludes the single sound W3 from the chord candidates and extracts the single sound W1 and the single sound W2 as the chord.

The processing unit 24 may adjust the above-described threshold related to the chord extraction according to a style of a piece (such as a fast piece or a slow piece). Appropriate threshold setting improves extraction accuracy. The processing unit 24 may grasp single sounds by key strokes with different hands from the imaging data. It is possible to clearly distinguish a single sound by a key stroke with the right hand and a single sound by a key stroke with the left hand. The adjustment of the threshold and the designation of the chord may be performed by user operation.

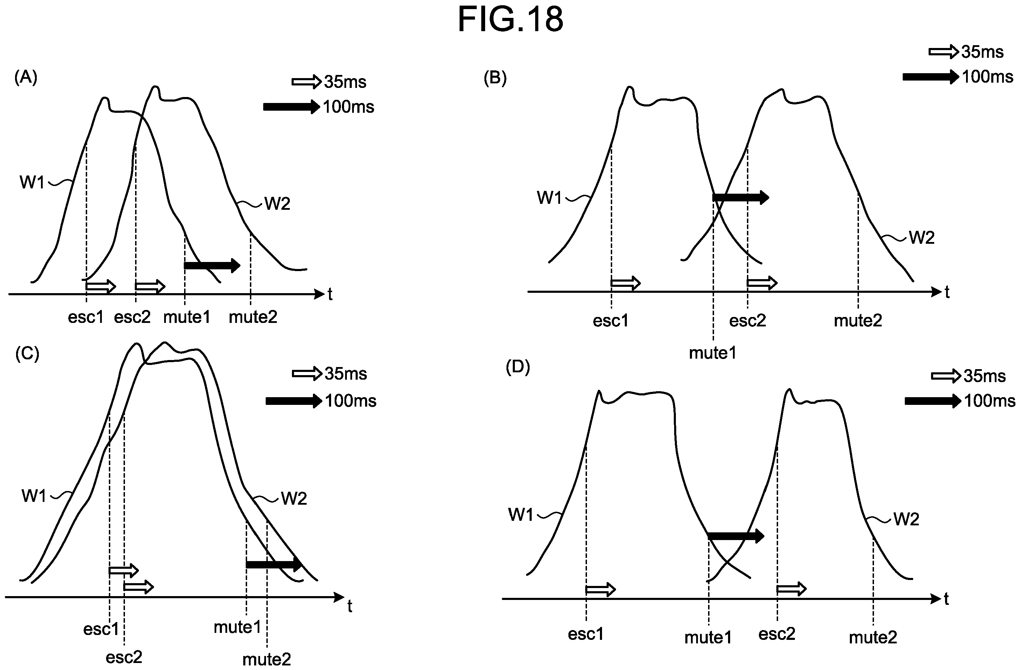

FIG. 18 to FIG. 21 are views illustrating examples of extraction of continuous sounds. In this example, the escape passing timing and the mute passing timing are used among the feature amounts of the single sound.

Waveforms of two single sounds in which waveforms at least a part of waveforms of the keyboard movement amounts overlaps are illustrated as examples in each of (A) to (D) in FIG. 18. The single sounds are respectively referred to as a single sound W1 and a single sound W2 in the drawing. The escapement passing timing of the single sound W1 and that of the single sound W2 are respectively referred to as timing esc1 and timing esc2 in the drawings. The mute passing timings of the single sound W1 and that of the single sound W2 are respectively referred to as timing mute1 and timing mute2 in the drawings.

For example, in a case where both of the following expression (3) and expression (4) are satisfied, the processing unit 24 extracts the single sound W1 and the single sound W2 as the continuous sounds. 35 ms and 100 ms in the expressions are examples of the threshold. 35 ms is the same as that in the expression (1) and expression (2) of the chord extraction described above.

$$esc1 + 35ms < esc2 < mute1 + 100ms \qquad \cdots (3)$$

$$mute1 < mute2 \qquad \cdots (4)$$

Among (A) to (D) of FIG. 18, (A) and (B) of FIG. 18 satisfy both of the above expression (3) and expression (4). The processing unit 24 extracts the single sound W1 and the single sound W2 illustrated in (A) and (B) of FIG. 18 as the continuous sounds.

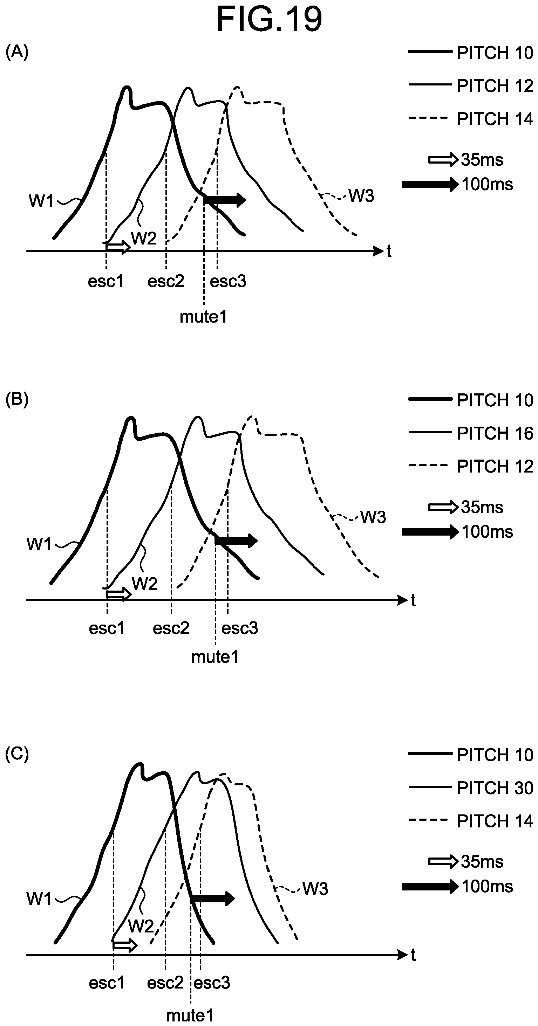

In each of (A) to (C) of FIG. 19, three single sounds are illustrated as examples together with pitches. The single sounds are respectively referred to as a single sound W1 to a single sound W3 in the drawing. The escapement passing timing of the single sound W1 to the single sound W3 is referred to as timing esc1 to timing esc3 in the drawing. The mute passing timing of the single sound W1 is referred to as timing mute1 in the drawing. For example, with the single sound W1 as a reference, the processing unit 24 extracts a sound continuous with (sound adjacent to) the single sound W1 as continuous sounds together with the single sound W1.

In a case where there is a single sound having the earliest escapement passing timing and a pitch closest to the pitch of the single sound W1, the processing unit 24 extracts the single sound as the continuous sounds together with the single sound W1. In the example illustrated in (A) of FIG. 19, pitches of the single sound W2 and the single sound W3 are respectively 12 and 14. The timing esc2 of the single sound W2 is earlier than the timing esc3 of the single sound W3, and the pitch (= 12) of the single sound W2 is the closest to the pitch (= 10) of the single sound W1. The processing unit 24 extracts the single sound W1 and the single sound W2 as the continuous sounds.

In a case where there is a single sound which has the earliest escapement passing timing and in which a difference in a pitch from the single sound W1 is equal to or smaller than the threshold, the processing unit 24 extracts the single sound as continuous sounds together with the single sound W1. An example of the threshold is 12. In the example illustrated in (B) of FIG. 19, the pitches of the single sound W2 and the single sound W3 are respectively 16 and 12. Between the single sound W2 and the single sound W3, the timing esc2 of the single sound W2 is earlier than the timing esc3 of the single sound W3, and the difference in the pitch from the single sound W1 (= 2 (= 12 - 10)) is equal to or smaller than the threshold 12. The processing unit 24 extracts the single sound W1 and the single sound W2 as the continuous sounds.

In a case where there is a waveform in which the escapement passing timing is the earliest and a difference in the pitch from the single sound W1 is larger than the threshold, the processing unit 24 extracts the single sound having the smallest pitch difference from the single sound W1 as the continuous sounds together with the single sound W1. In the example illustrated in (C) of FIG. 19, the pitches of the single sound W2 and the single sound W3 are respectively 30 and 14. Between the single sound W2 and the single sound W3, although the timing esc2 of the single sound W2 is earlier than the timing esc3 of the single sound W3, a difference in the pitch between the single sound W2 and the single sound W1 (= 20 (= 30 - 10)) is larger than the threshold 12. The difference in the pitch of the single sound W3 from the single sound W1 (= 4 (= 14 - 10)) is the smallest. The processing unit 24 extracts the single sound W1 and the single sound W3 as the continuous sounds.

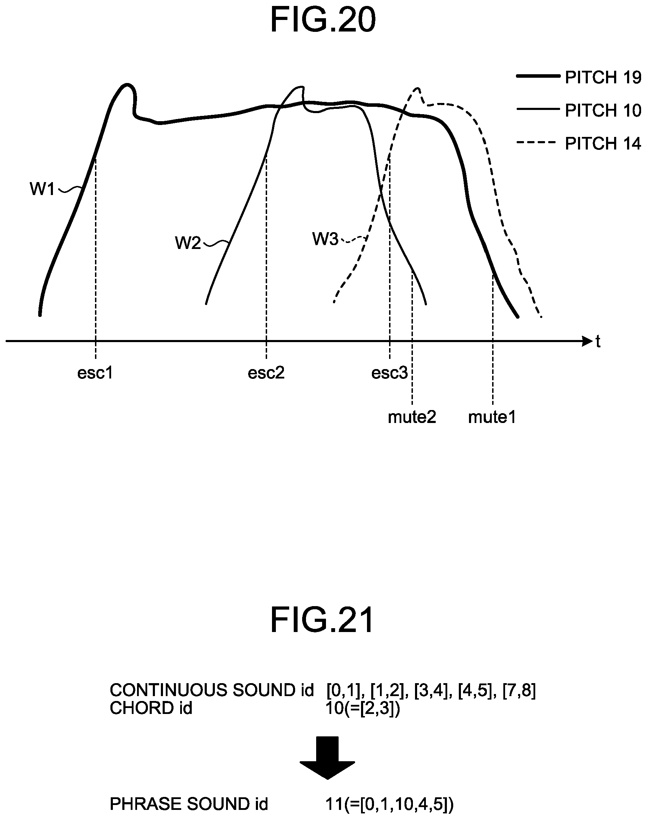

In FIG. 20, three single sounds are illustrated as examples together with pitches. The escapement passing timing of the single sound W1 to the single sound W3 is referred to as timing esc1 to timing esc3 in the drawing. The mute passing timings of the single sound W1 and that of the single sound W2 are respectively referred to as timing mute1 and timing mute2 in the drawings. The pitches of the single sound W1, the single sound W2, and the single sound W3 are 19, 10, and 14.

Single sounds having the same determination results based on both a front reference (corresponding to a case of being seen as the single sound W1 in FIG. 18) and a rear reference (corresponding to a case of being seen as the single sound W2 in FIG. 18) are extracted as the continuous sounds. Specifically, in the example illustrated in FIG. 20, in a case where the single sound W1 is taken as the front reference, the single sound W1 and the single sound W3 are determined as the continuous sounds. In a case where the single sound W2 is taken as the front reference, the single sound W2 and the single sound W3 are determined as the continuous sounds. In a case where the single sound W3 is taken as the rear reference, the single sound W2 and the single sound W3 are determined as the continuous sounds. The processing unit 24 extracts the single sound W2 and the single sound W3 in which the determination results of both the references match as continuous sounds. Note that in a case where the single sound W1 is taken as the rear reference, in a case where the single sound W2 is taken as the rear reference, and in a case where the single sound W3 is taken as the front reference, it is determined that there is no continuous sound.

As described above, the processing unit 24 may adjust the threshold according to the style of the piece (such as the fast piece or the slow piece). Appropriate threshold setting improves extraction accuracy. For example, it is possible to control a decrease in extraction accuracy due to a case where the expression (3) and expression (4) of the continuous sound extraction described above are not satisfied, a case where continuous key strokes are performed in a state in which the left and right hands are close to each other, a case where single sounds at separate pitches are continuously struck only with one hand, or the like. For example, extraction can be performed even in a case where the single sound W2 is a single sound by a key stroke different from that of the single sound W1 and the single sound W1 although the pitch of the single sound W2 is 15, or a case where the pitch of the single sound W2 is 23. The right and left hands may be distinguished according to the imaging data, and threshold adjustment, continuous sound designation, and the like by user operation may be performed.

Single sounds and a chord included in the continuous sounds are schematically illustrated in FIG. 21. id that uniquely specifies the continuous sounds is referred to as continuous sounds id in the drawing. The continuous sounds id include a combination of id of a plurality of single sounds included in the continuous sounds. In this example, the continuous sounds id includes a combination of single sounds with id = 0 and 1, a combination of single sounds with id = 1 and 2, a combination of single sounds with id = 3 and 4, a combination of single sounds with id = 4 and 5, and a combination of single sounds with id = 7 and 8. id that uniquely specifies the chord is referred to as a chord id in the drawing. In this example, the chord id is 10. The chord includes single sounds with id = 2 and 3.

The processing unit 24 groups single sounds having coupled (overlapping) id into the continuous sounds. In a case where there is a chord including a single sound to be grouped, the chord is also grouped.

Returning to FIG. 8, as described above, the processing unit 24 generates data packets of the extracted single sound, chord, and continuous sounds as the note, the chord, and the phrase. Data including the generated note, chord, and phrase is data 23b. The data 23b is stored in the storage unit 23.

FIG. 22 is a view illustrating an example of data. The data 23b includes the note, the chord, and the phrase. In this example, each of the note, the chord, and the phrase includes "basic information", "time-series data", a "feature amount", and "others".

The "basic information" is information common to the note, the chord, and the phrase. Examples of the basic information include "ID", "attribute", "key", "onset", "offset", "samplingRate", and "components".

The "ID" uniquely specifies the note, the chord, or the phrase. The "attribute" indicates an attribute. The "attribute" of the note is note. The "attribute" of the chord is chord. The "attribute" of the phrase is phrase. The "key" indicates a struck keyboard key. The "key" of the chord or the phrase may indicate a keyboard key of each of a plurality of single sounds, or may indicate only a representative keyboard key (such as a top note, a leading sound, or the like). The "onset" and "offset" are as described above. The "samplingRate" is a sampling rate (corresponding to a base clock) of the keyboard sensor 11a that is the main sensor 11. The "components" are child elements included in the data. Since there is no child element in the note, the "components" of the note is null. The "components" of the chord is represented by the ID of the note included in the chord. The "components" of the phrase is represented by the ID of the note or the chord included in the phrase.

The "time-series data" represents data at each time t. The time-series data of the note will be described as an example. Examples of the time-series data include "hackkey", "handPosture", and "bodyPosture".

The "hackkey" is related to, for example, a keyboard movement amount. Examples of the time-series data of the "hackkey" include "data", "vel", "samplingRate", and "timeshift". The "data" is a detection result of the keyboard sensor 11a. The "vel" indicates keyboard movement velocity. The "samplingRate" is a sampling rate of the keyboard sensor 11a. The "timeshift" indicates a shift of head data in the "data" from the onset. Utilization for a case where heads of measurement by the sensors are not aligned, a case where it is desired to intentionally shift time and insert data at the time of preparation operation, and the like is possible.

The "handPosture" relates to, for example, movements of fingers. Examples of the time-series data of the "handPosture" include "data", "samplingRate", and "timeshift". The "data" is a detection result of the finger sensor 12c. The "samplingRate" is a sampling rate of the finger sensor 12c. The "timeshift" is similar to what has been described above.

The "bodyPosture" relates to, for example, a posture of a body. Examples of the time-series data of the "bodyPosture" include "data", "samplingRate", and "timeshift". The "data" is a detection result of the body sensor 12d. The "samplingrate" is a sampling rate of the body sensor 12d. The "timeshift" is similar to what has been described above.

The time-series data of the chord and the phrase is time-series data of the note included therein.

The "feature amount" represents a feature amount acquired from a detection result of each sensor (such as the above-described time-series data). The note, chord, and phrase may respectively have different feature amounts.

Examples of the feature amount of the note include a feature amount of the "hackkey", a feature amount of the "handPosture", and the "sensoryEval". The "sensoryEval" is a feature amount not based on the detection results of the plurality of sensors 1, such as sensory evaluation and is input via the user interface unit 21, for example.

Examples of the feature amount of the "hackkey" include "maxDepth", "peakDesVel", "peakTiming", and "bottomTiming". The "maxDepth" indicates the maximum depth of a key stroke. The "peakDesVel" indicates peak velocity at the time of the key stroke. The "peakTiming" indicates timing at which the peak velocity is reached, and more specifically indicates time until the peak velocity is reached from onset. The "bottomTiming" indicates timing at which the keyboard reaches the bottom.

Examples of the feature amount of the "handPosture" includes "range" and "peakVel". The "range" indicates a range of movements of the fingers. The "peakVel" indicates peak velocity of the fingers.

Examples of the feature amount of the "sensoryEval" include "softness" and "brightness". The "softness" indicates softness of sound. The "brightness" indicates brightness of sound.

Although not illustrated in FIG. 22, detection results (time-series data) of the other sub-sensors 12 such as the sound collection sensor 12a, the imaging sensor 12b, and the pedal sensor 12e and feature amounts acquired therefrom may be similarly described.

Examples of the feature amount of the chord include a feature amount of the "hackkey", a feature amount of "handposture", and the "sensoryEval". The feature amount of the "handposture" and the feature amount of the "sensoryEval" are as described above.

Examples of the feature amount of the "hackkey" include "peakDesVel", "onsetShift", "offsetShift", and "loudnessBalance". The "peakDesVel" is as described above. The "onsetShift" and "offsetShift" indicate a shift (variation) of key stroke timing. The "loudnessBalance" indicates a balance of the volume of the single sounds in the chord.

Examples of the feature amount of the phrase include "hackkey", "handPosture", and "sensoryEval". The "handPosture" and "sensoryEval" are as described above.

Examples of the feature amount of the "hackkey" include "peakDesVel", "legato", "phrasing", and "dynamic". The "peakDesVel" is as described above. The "legato" indicates an overlapping state of sounds in the phrase. The "phrasing" indicates how to pause between sounds in the phrase. The "dynamic" indicates a balance of the volume of sounds in the phrase.

Although not illustrated in FIG. 22, detection results (time-series data) of the other sub-sensors 12 such as the sound collection sensor 12a, the imaging sensor 12b, and the pedal sensor 12e and feature amounts acquired therefrom may be similarly described.

"Others" is information other than the detection results of the plurality of sensors 1. Examples of "others" include "pieceInfo" and "handInfo".

The "pieceInfo" indicates information of a performed piece. Examples of the "pieceInfo" include "title", "measure", and "number". The "title" indicates a name of the piece or the like. The "measure" indicates a bar number. The "number" indicates a sound number in a bar.

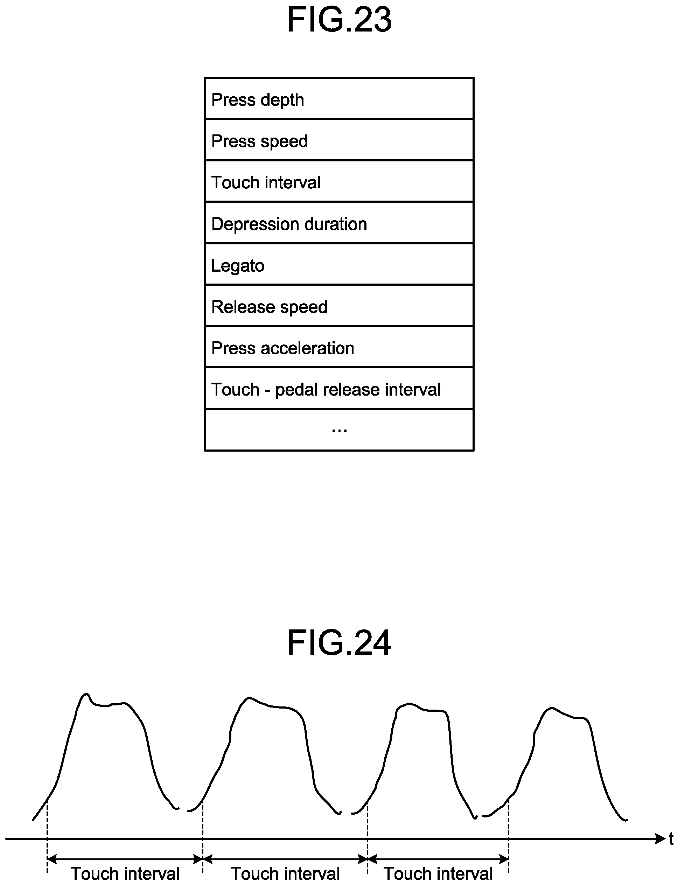

The data 23b organizes (associates) and describes the detection results of the plurality of sensors 1 and the feature amounts for each of the single sound, the chord, and the continuous sounds in an understandable manner. By generating the data 23b in such a data format (data structure), it becomes possible to organize and easily utilize information useful for supporting improvement in the piano performance skill of the user U. Examples of utilization of the data 23b include presentation of information based on the data 23b and utilization as machine learning data. Some examples of feature amounts that may be presented as information will be described with reference to FIG. 23.

FIG. 23 is a view illustrating examples of feature amounts that may be presented as useful information. The examples of the feature amounts include "Press depth", "Press speed", "Touch interval", "Depression duration", "Legato", "Release speed", "Press acceleration", and "Touch-pedal release interval".

The "Press depth" indicates the "maxDepth" (maximum depth of the key stroke) described above. The "Press speed" indicates the "peakDesVel" (peak velocity at the time of the key stroke) described above.

The "Touch interval" is a feature amount of the continuous sounds and indicates a key stroke interval of adjacent sounds. The description will be made also with reference to FIG. 24.

FIG. 24 is a view schematically illustrating an example of the Touch interval. The Touch interval between adjacent (continuous) single sounds is schematically illustrated. For example, the processing unit 24 calculates the Touch interval by using the following expression (5). "escapement timing2 + onset2" in the expression indicates the escapement passing timing of a later single sound of the adjacent single sounds. "escapement_timing1 + onset1" indicates the escapement passing timing of an earlier single sound of the adjacent single sounds.

$$Touch\ interval = (escapement\_timing2 + onset2) \qquad \cdots (5)$$
$$- (escapement\_timing1 + onset1)$$

Returning to FIG. 23, the "Depression duration" indicates the above-described pressing time.

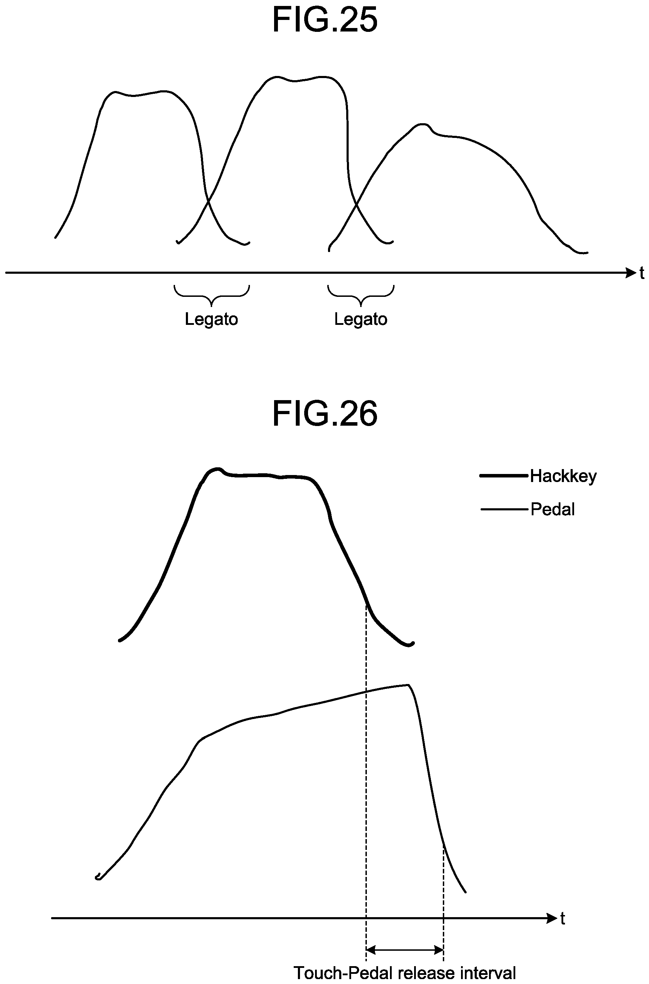

"Legato" indicates an overlap of sounds and smoothness of a tone row as described above. Description will be made also with reference to FIG. 25.

FIG. 25 is a view schematically illustrating an example of Legato. Legato between the adjacent single sounds is schematically illustrated. For example, the processing unit 24 calculates Legato by using the following expression (6). "mute_timing1 + onset1" in the expression indicates the mute passing timing of an earlier single sound of the adjacent single sounds. "escapement timing2 + onset2" indicates the escapement passing timing of a later single sound of the adjacent single sounds.

$$Legato = (mute\_timing1 + onset1) \qquad \cdots (6)$$
$$- (escapement\_timing2 + onset2)$$

Returning to FIG. 23, the "Release speed" indicates the peak key release velocity described above.

The "Press acceleration" indicates the maximum value of the keyboard movement acceleration. The processing unit 24 calculates the maximum value of the keyboard movement acceleration between onset and offset of one single sound as the Press acceleration of the single sound.

The "Touch-pedal release interval" may be a feature amount of any of the single sound, the chord, and the continuous sound, and indicates an interval between the key release timing and the timing at which the pedal is released. The description will be made also with reference to FIG. 26.

FIG. 26 is a view schematically illustrating an example of the Touch-pedal release interval. A graph line Hackey indicates the keyboard movement amount. A graph line Pedal indicates a pedal movement amount. For example, the processing unit 24 calculates the Touch-pedal release interval by using the following expression (7). "$offset_{pedal}$" in the expression indicates the timing at which the pedal is released. "$offset_{hackkey}$" indicates the key release timing.

$$Touch - pedal\ release\ interval = offset_{pedal} - offset_{hackkey} \qquad \cdots (7)$$

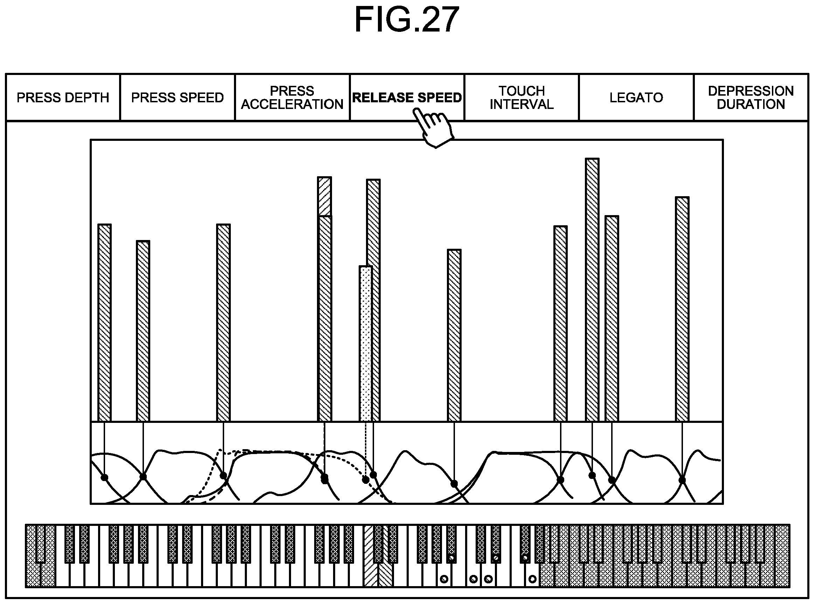

Returning to FIG. 8, the user interface unit 21 presents (displays) the feature amounts and the like calculated by the processing unit 24, that is, various feature amounts and the like described above. Examples of a specific user interface will be described with reference to FIG. 27 to FIG. 33.

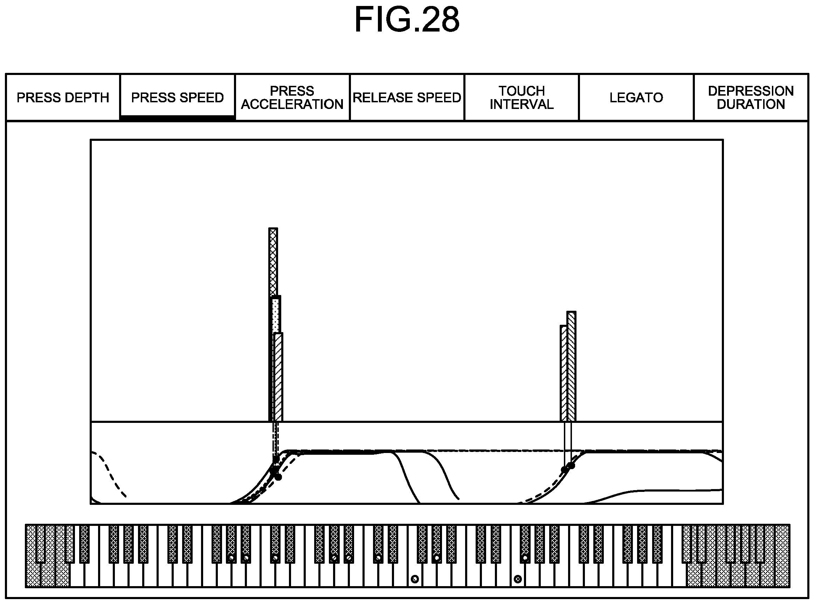

FIG. 27 to FIG. 33 are views illustrating the examples of the user interface. Examples of a user interface that effectively displays the detection results of the plurality of sensors 1 and the feature amounts are illustrated in FIG. 27 and FIG. 28. For example, the user interface unit 21 presents the detection results of the keyboard sensor 11a and the feature amounts in association with each other.

The user interface illustrated as the example in FIG. 27 displays a waveform (time-series data) of the keyboard movement amount, bars indicating the feature amounts, a keyboard, and the like. Each position of the waveform and the feature amount are displayed in association with each other. A tab-selected feature amount among the plurality of feature amounts is displayed. The generation time of the feature amount, a position in the waveform, magnitude of the feature amount, and the like can be grasped. The feature amount generated between two key strokes is represented by a position and a width in the waveform.

As illustrated as the example in FIG. 28, feature amounts of a plurality of single sounds included in the chord may be color-coded. The chord variation is visualized. Color-coding is performed on the basis of the note of each of the single sounds included in the components of the chord corresponding to the chord to be displayed.

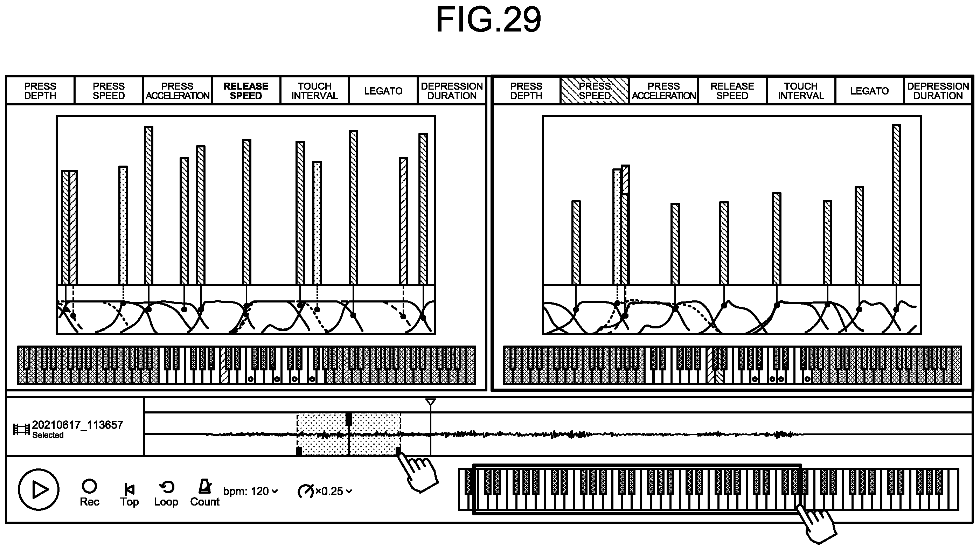

Examples of a user interface that makes it easy to reach a focus point are illustrated in FIG. 29 to FIG. 33. For example, the user interface unit 21 presents a feature amount corresponding to selection (designation or the like) by user operation. Examples of the selection include selection of an operation range (range of keyboard keys) on a keyboard, selection of a time range in the piano performance, selection of time in the piano performance, and selection of lesson information.

The user interface illustrated as the example in FIG. 29 enables selection of the range of the keyboard keys, the time range, or the time. A feature amount or the like corresponding to the selected range or the like is displayed. The selection may be changeable seamlessly and in real time.

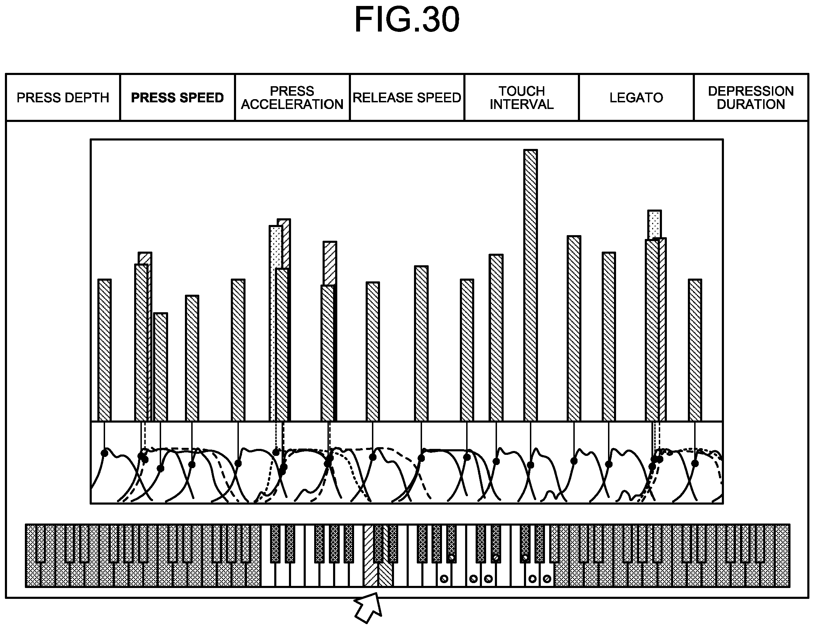

As indicated by a white arrow in FIG. 30, the corresponding keyboard key may be highlighted. In addition to or instead of the above, a sound of the corresponding keyboard key may be output. A struck key in the selection range may be displayed as a circle. A target range can be easily designated.

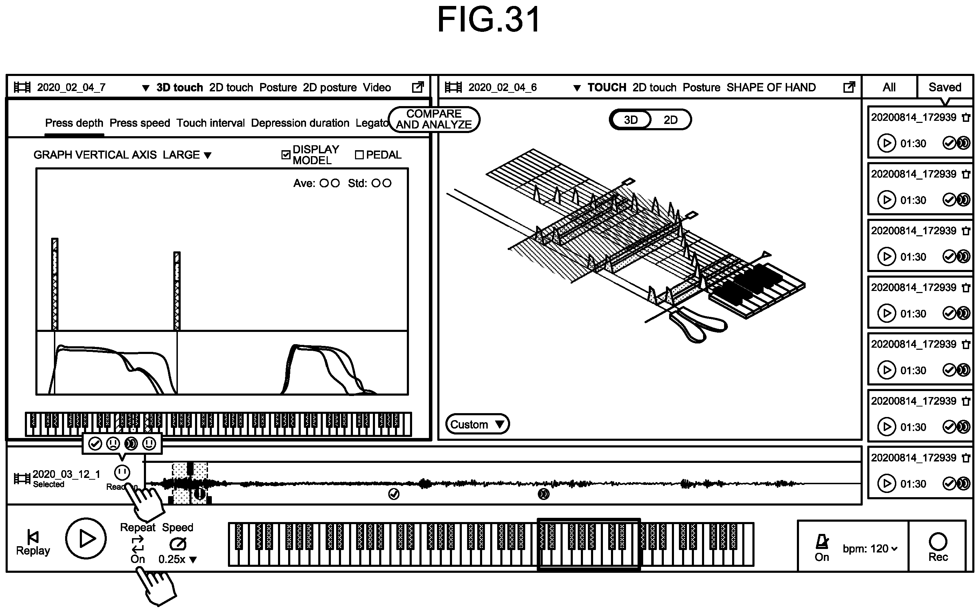

The user interface illustrated as the example in FIG. 31 enables marking and annotation of a point of interest while reproducing sound. The marking is performed according to user operation. Subsequently, an icon can be changed. The selection range may be reproduced in a looped manner. A focus point can be repeatedly checked.

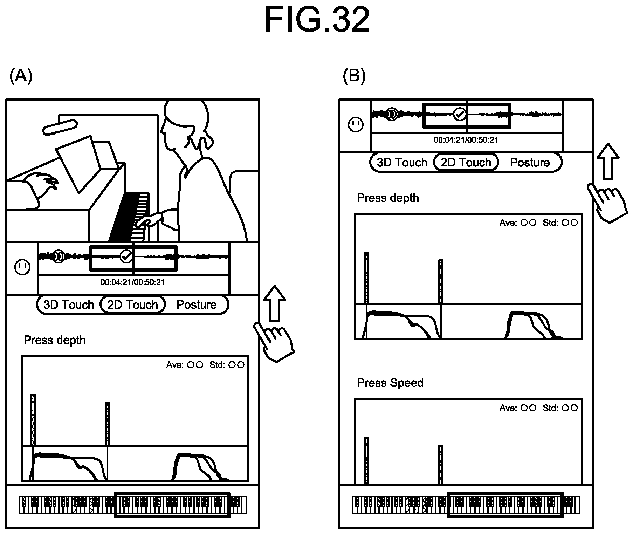

An example of a user interface in a case where the information processing device 2 is a smartphone or the like is illustrated in FIG. 32. An image (imaging data) of the user U, a feature amount "Press depth" (maximum depth of the key stroke), a feature amount "Press Speed" (peak velocity at the time of the key stroke), and the like are sequentially displayed from an upper side toward a lower side of a screen. The feature amounts are switched by scrolling. When the screen is scrolled downward in a state illustrated in (A) of FIG. 32, a state illustrated on a right side of (B) of FIG. 32 is acquired.

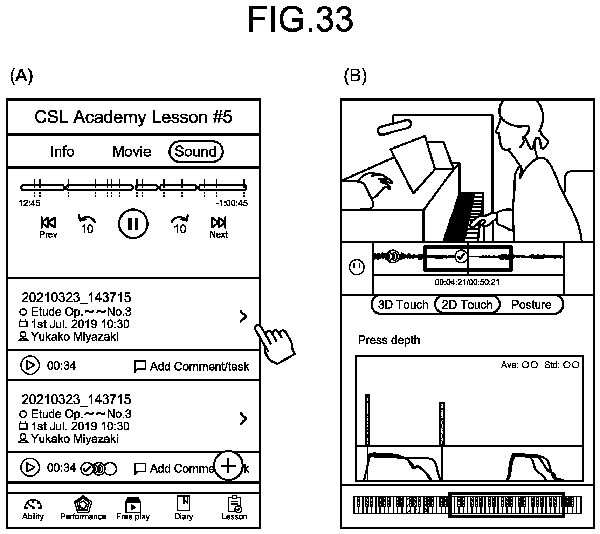

A user interface illustrated as the example in FIG. 33 enables selection of the lesson information. As illustrated in (A) of FIG. 33, corresponding lesson information is displayed below a sequence bar, and a lesson voice is output. By the selection of the lesson information, the corresponding performance information is displayed as illustrated in (B) of FIG. 33. The performance information is a result of the piano performance by the user U, more specifically, the detection results of the plurality of sensors 1, and is information included in the data 23b. Performance information corresponding to a lesson can be easily searched for. A seek position can be shifted in accordance with the performance information, and an effective review can be performed. In addition to the lesson voice and the lesson information, the performance information may be searched for while switching to a moving image or the like is performed. It is possible to check the performance information while recalling instruction and a movement of the body during the lesson.

An evaluation (ranking) result of the piano performance may be presented. An example of an evaluation result is a comparison result between the performance information and reference performance information, more specifically, a comparison result between the data 23b and the reference data 23c. Information specifically important for improving the piano performance skill can be told to the user U. The reference data 23c is described in a data format (data structure) similar to that of the data 23b. For example, the processing unit 24 compares the data 23b with the reference data 23c on the basis of a similarity between the data 23b and the reference data 23c (FIG. 8).

In the data 23b and the reference data 23c, data to be compared is designated by, for example, user operation. The processing unit 24 aligns corresponding note of the both pieces of data and calculates the similarity between the pieces of data. For example, the similarity of the feature amounts within the selection range is calculated. The processing unit 24 determines whether the calculated similarity is distant, and displays an alert or the like of a portion where the similarity is distant.

Since the data 23b and the reference data 23c are described in the data format organized for each of the note, chord, and phrase (quantified on a common scale), it is easy to compare single sounds, chords, and continuous sounds respectively. Some examples of specific similarity calculation and similarity determination will be described.

The processing unit 24 may calculate similarity of a single feature amount. A feature amount of the reference data 23c of an i-th key stroke is a feature amount $a_i$, and a feature amount of the data 23b is a feature amount $b_i$. The processing unit 24 calculates similarity and determines similarity by using the following expressions (8) to (12), for example. A left side of each expression is the similarity. In a case where each of the expressions is satisfied, it is determined that similarity is distant (dissimilar).

$$abs(a_i - b_i)/a_i > thresh \qquad \cdots (8)$$

$$abs(a_i - b_i) > thresh \qquad \cdots (9)$$

$$abs(a_i - b_i)/ave([a_1, a_2, \cdots, a_n]) > thresh \qquad \cdots(10)$$

$$abs(a_i - b_i) > upper + iqr * thresh \; or \; abs(a - b) < lower - iqr * thresh \qquad (11)$$

$$abs(a_i - b_i) > upper_{global} + iqr_{global} * thresh \; or \; abs(a_i - b_i) < lower_{global} - iqr_{global} * thresh \qquad (12)$$

abs in the above expressions is an absolute value. ave is an average value. thresh is a threshold (absolute value) set for each feature amount, and may be adjusted by, for example, a style of a piece (such as a fast piece or a slow piece). iqr, upper, and lower are values related to the quartile and are calculated from all abs $(a_i - b_i)$ in the performed piece. iqr is in a quartile range (IQR), and is from the 75th percentile to the 25th percentile. upper is the 75th percentile. lower is the 25th percentile. $iqr_{global}$, $upper_{global}$, and $lower_{global}$ are iqr, upper, and lower of global data. The global data is data for all the pieces accumulated so far or all the pieces of the same style accumulated so far.

The above expression (8) is satisfied in a case where a relative value of a deviation from the reference data 23c is large. The above expression (9) is satisfied in a case where an absolute value of the deviation from the reference data 23c is large. The above expression (10) is satisfied in a case where a relative value of a deviation from an average value of the reference data 23c of all the n key strokes is large. The above expression (11) is satisfied in a case where there is a large deviation in the whole on the basis of the quartile IQR in terms of outlier analysis. The above expression (12) is different from the above expression (11) in a point that $iqr_{global}$, $upper_{global}$, and $lower_{global}$ based on the global data are used.

The processing unit 24 may calculate similarities of a plurality of feature amounts within the selection range. The feature amounts of m key strokes included in the selection range are respectively referred to as feature amounts $a_1$ to $a_m$. The processing unit 24 performs similarity calculation and similarity determination by using the following expressions (13) to (18), for example. A left side of each expression is the similarity. In a case where each of the expressions is satisfied, it is determined that similarity is distant (dissimilar).

$$\left(\sum_{i=1}^{m} (a_i - b_i)^2\right)^{0.5} /ave([a_1, a_2, ,, a_m]) > thresh \qquad \cdots(13)$$

$$\left(\sum_{i=1}^{m} (a_i - b_i)^2\right)^{0.5} > thresh \qquad \cdots(14)$$

$$abs(ave([a_1, a_2, ,, a_m]) - ave([b_1, b_2, ,, b_m])) /ave([a_1, a_2, ,, a_m]) > thresh \qquad (15)$$

$$abs(std([a_1, a_2, ,, a_m]) - std([b_1, b_2, ,, b_m])) /ave([a_1, a_2, ,, a_m]) > thresh \qquad (16)$$

$$ave(abs(a_1 - b_1)/a_1, abs(a_2 - b_2)/a_2, ,, abs(a_m - b_m)/a_m) > thresh \qquad (17)$$

$$ave([abs(a_1 - b_1), abs(a_2 - b_2), ,, abs(a_m - b_m)]) /ave([a_1, a_2 ..., a_n]) > thresh \qquad (18)$$

std in the expressions is a standard deviation. The expression (13) is satisfied in a case where a relative value of the Euclidean distance of the feature amount with respect to the average value of the reference data 23c is large. The expression (14) is satisfied in a case where an absolute value of the Euclidean distance of the feature amount is large. The expression (15) is satisfied in a case where a difference between the average values of the feature amounts is large. The expression (16) is satisfied in a case where a variation in the feature amounts is large. The expression (17) is satisfied in a case where an average value of numerical values on the left side of the expression (8) described above is large, and the expression (18) is satisfied in a case where an average value of numerical values on the left side of the expression (10) described above is large. There are advantages such as ease of calculation.

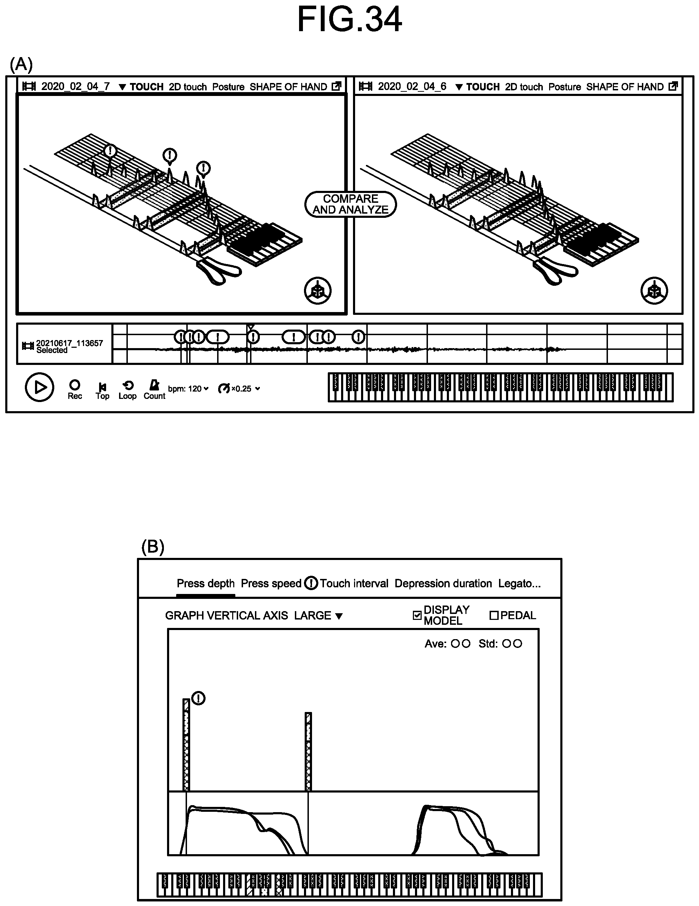

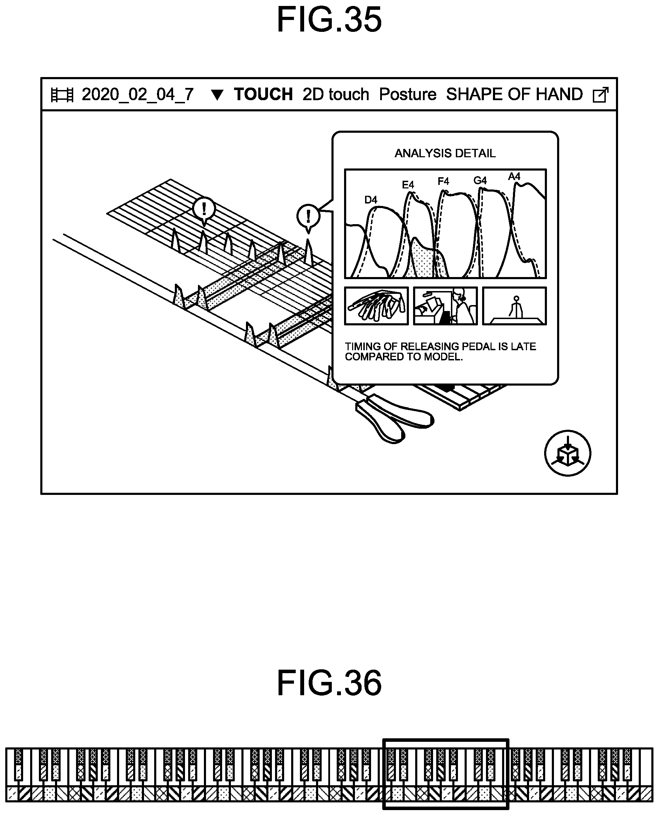

For example, the data 23b and the reference data 23c are compared by the similarity determination as described above. The user interface unit 21 presents a comparison result. For example, the user interface unit 21 displays an alert indicating a portion where the similarity between the data 23b and the reference data 23c is distant. Examples of a specific user interface will be described with reference to FIG. 34 and FIG. 35.

FIG. 34 and FIG. 35 are views illustrating the example of the user interface. The user interface illustrated as the example in FIG. 34 displays an alert (exclamation mark in this example) in such a manner that a portion having a large difference in the similarity can be easily grasped. Different kinds (such as different colors) of alerts may be displayed for each feature amount of a comparison target. As illustrated in (A) of FIG. 34, an alert is displayed on some of 3D displayed key strokes, or an alert is displayed during a sequence indicating the entire piece. When the range selection is performed, an alert in the selection range is displayed as illustrated in (B) of FIG. 34.

As described above, the note may also include information such as a movement amount (pressed position) of a pedal and postures of the whole body and fingers. Comparison of these pieces of information is also possible. For example, the time-series movement of the fingers at the moment of the key stroke and the feature amount such as joint angular velocity at that time may be compared. Acoustic information and an acoustic feature amount of each key stroke may be compared. Information such as a performance video of one continuous sound (one phrase), an operating range of a joint measured by motion capture, and a posture may be compared. Information such as a pedaling amount and a difference between pedaling timing and key stroke timing may be compared.

The user interface illustrated as the example in FIG. 35 performs pop-up display of specific information corresponding to the selected alert. In this example, a comparison result indicating that timing of releasing the pedal is later than the reference data 23c is displayed. As the specific information, a detection result of the sub-sensor 12 may also be displayed.

For example, the feature amount and the like are presented by various user interfaces as described above. The user interfaces are not limited to the above examples. Some examples of other user interfaces are described with reference to FIG. 36 to FIG. 38.

FIG. 36 to FIG. 38 are views illustrating examples of the user interfaces. A user interface illustrated as the example in FIG. 36 performs color-coding display of keyboard keys. A difference between the sounds can be easily understood. The color-coding may be HSB based or Lab based. A difference between a high sound and a low sound may be represented by color shading. Sensuous perception is made easier.

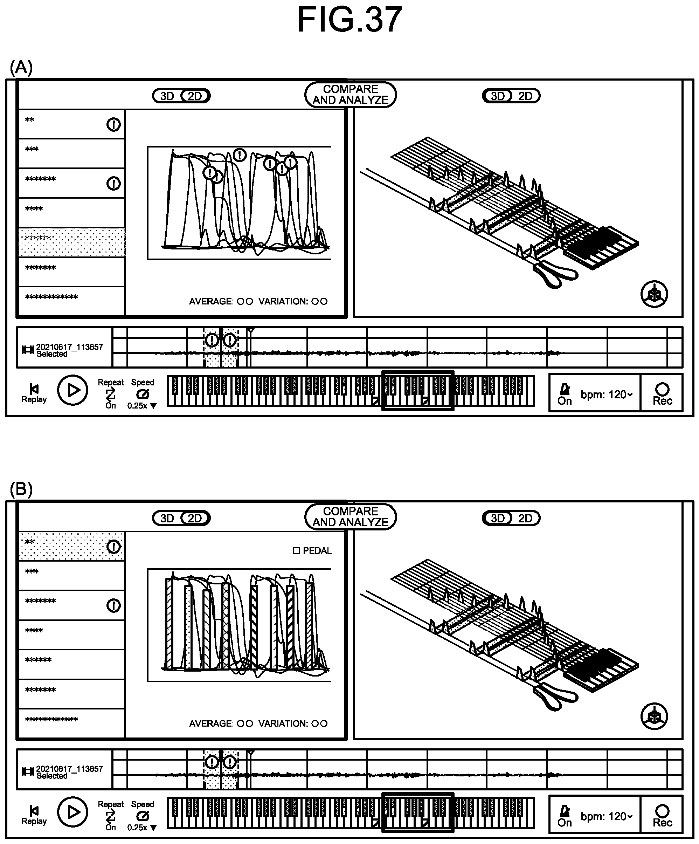

A user interface illustrated as the example in FIG. 37 displays a feature amount and a waveform in an overlay manner. In the example illustrated in (A) of FIG. 37, the plotted feature amount and the waveform of the keyboard movement amount are overlaid and displayed. In the example illustrated in (B) of FIG. 37, a bar-displayed feature amount and the waveform of the keyboard movement amount are overlaid and displayed.

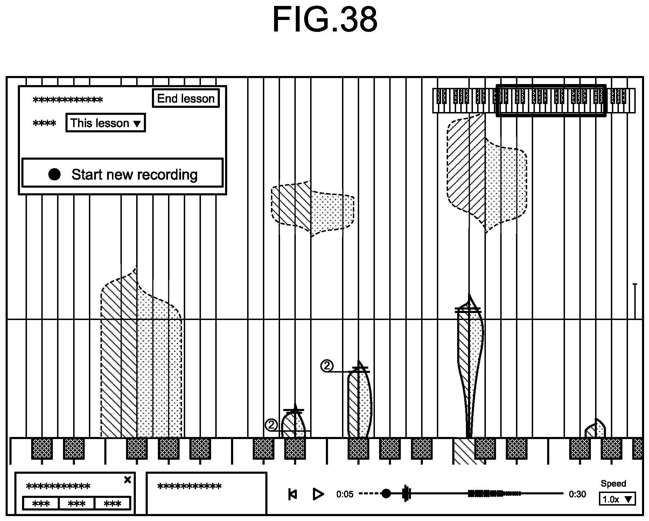

2D display illustrated as the example in FIG. 38 is also possible. A waveform of a key stroke movement amount corresponding to a key stroke is displayed to float from each keyboard key. The corresponding feature amount is displayed in the waveform. The waveform of the performance data and the waveform of the reference data 23c are displayed on the left and right, and comparison is easy.

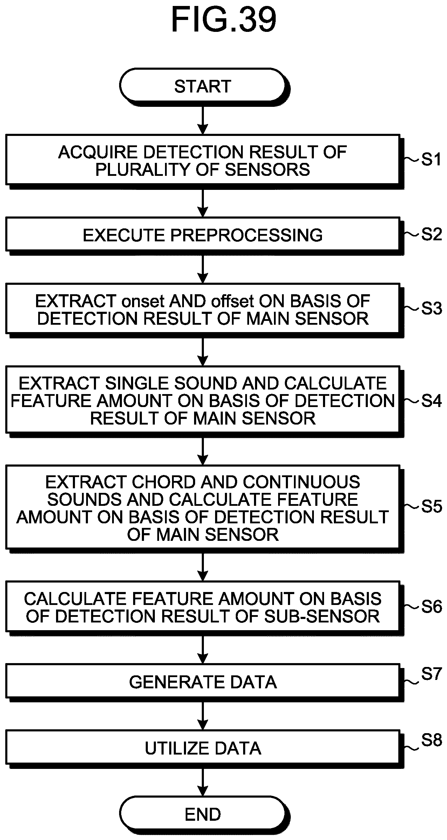

FIG. 39 is a flowchart illustrating an example of processing (information processing method) executed in the information processing system. As a premise, for example, it is assumed that the application program 23a is executed and the piano performance by the user U is performed. Since details of each piece of processing are as described above, the detailed description will not be repeated.

In Step S1, detection results of the plurality of sensors are acquired. The plurality of sensors 1 detects piano performance. The acquisition unit 22 of the information processing device 2 acquires detection results of the plurality of sensors 1.

In Step S2, preprocessing is executed. The processing unit 24 of the information processing device 2 filters the detection results of the plurality of sensors 1, such as the detection result of the keyboard sensor 11a. Note that the preprocessing may not be performed, and the processing of Step S2 is skipped in that case.

In Step S3, onset and offset are extracted on the basis of the detection result of the main sensor. The processing unit 24 of the information processing device 2 extracts the onset and the offset from the detection result (keyboard movement amount data) of the keyboard sensor 11a.

In Step S4, a single sound is extracted on the basis of the detection result of the main sensor, and a feature amount is calculated. The processing unit 24 of the information processing device 2 extracts a single sound on the basis of the onset and offset extracted in Step S3 described above, and calculates a feature amount acquired from the keyboard sensor 11a among the feature amounts of the single sounds.

In Step S5, a chord and continuous sounds are extracted on the basis of the detection result of the main sensor, and a feature amount is calculated. The processing unit 24 of the information processing device 2 extracts a chord and continuous sounds on the basis of the single sound extracted in Step S4 described above. Furthermore, the processing unit 24 calculates a feature amount acquired from the keyboard sensor 11a among the feature amounts of the chord and the continuous sounds on the basis of the feature amount of the single sound calculated in Step S4 described above.

In Step S6, the feature amount is calculated on the basis of the detection result of the sub-sensor. The processing unit 24 of the information processing device 2 calculates a feature amount acquired from the detection result of the sub-sensor 12 among the feature amounts of the single sound, the chord, and the continuous sounds which feature amounts are extracted in Step S4 and S5 described above.

In Step S7, data is generated. The processing unit 24 of the information processing device 2 stores the note, the chord, and the phrase generated on the basis of the single sound, the chord, and the continuous sounds extracted in Step S4 to Step S6 described above and the calculated feature amounts thereof in the storage unit 23 as the data 23b.

In Step S8, the data is utilized. For example, by using the data 23b, the user interface unit 21 of the information processing device 2 presents, to the user U, various kinds of information that can be used to support the piano performance of the user. As described above, the data 23b may be used as the machine learning data.

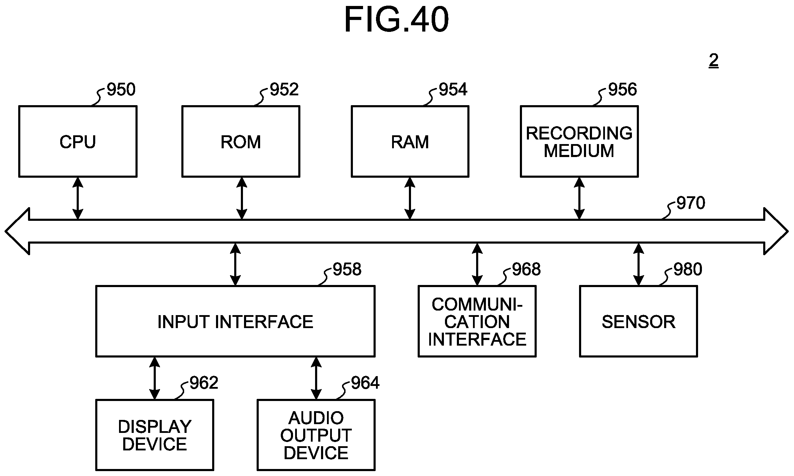

FIG. 40 is a view illustrating a hardware configuration example of the information processing device. In this example, the information processing device 2 includes a CPU 950, a ROM 952, a RAM 954, a recording medium 956, and an input/output interface 958. Furthermore, the information processing device 2 includes a display device 962, an audio output device 964, a communication interface 968, and a sensor 980. Furthermore, the information processing device 2 connects the components by a bus 970 as a transmission path of data, for example.

The CPU 950 includes, for example, one or two more processors including an arithmetic circuit such as a CPU, various processing circuits, and the like, and functions as the processing unit 24 that controls the entire information processing device 2.

The ROM 952 stores programs used by the CPU 950, control data such as a calculation parameter, and the like. The RAM 954 temporarily stores, for example, a program or the like executed by the CPU 950. The ROM 952 and the RAM 954 function as the storage unit 23 of the information processing device 2.

The recording medium 956 functions as the storage unit 23. Examples of the recording medium 956 include a magnetic recording medium such as a hard disk, and a nonvolatile memory such as a flash memory. Furthermore, the recording medium 956 may be detachable from the information processing device 2.

The input/output interface 958 connects, for example, the display device 962, the audio output device 964, and the like. Examples of the input/output interface 958 include a universal serial bus (USB) terminal, a digital visual interface (DVI) terminal, a high-definition multimedia interface (HDMI) (registered trademark) terminal, various processing circuits, and the like.

The display device 962 and the audio output device 964 function as the user interface unit 21 of the information processing device 2. Examples of the display device 962 include a liquid crystal display, an organic electro-luminescence (EL) display, and the like.

Note that it goes without saying that the input/output interface 958 can be connected to an external device such as an operation input device (such as keyboard, mouse, or the like) outside the information processing device 2, or an external display device.

The communication interface 968 is a communication means included in the information processing device 2, and functions as a communication unit for performing wireless or wired communication with an external device via a network or directly. Here, the communication interface 968 is, for example, a communication antenna and a radio frequency (RF) circuit (wireless communication), an IEEE 802.15.1 port and a transmission/reception circuit (wireless communication), an IEEE 802.11 port and a transmission/reception circuit (wireless communication), or a local area network (LAN) terminal and a transmission/reception circuit (wired communication).

2. Modification example

The disclosed technique is not limited to the above embodiment. Some modification examples will be described. In the above embodiment, the piano performance has been described as an example of the skill acquisition operation. However, the skill acquisition operation may be a performance of a musical instrument other than the piano, or may be operation other than the performance of the musical instrument. Some examples of other operation are described.

Another example of the skill acquisition operation is driving of a vehicle. In a case where driving is performed from one point to another point, for example, description in a nested data format (data structure) as follows is possible.

Driving of a vehicle

    -> Road situation (such as slope or curve)
    -> Movement of the vehicle
    -> Steering wheel, accelerator, and brake

According to the nested description in the above manner, for example, in a case where driving of a vehicle is driving of a taxi, the following analysis
passenger satisfaction with respect to driving of the taxi is low

    -> When checked with an in-vehicle camera, the passenger seems to feel stressed at a curve
    -> When checked with an acceleration sensor, it seems that a movement of the vehicle is rattling with drastic acceleration fluctuations
    -> This is because timing of turning the steering wheel and timing of stepping on the brake are different

becomes possible.
Examples of the main sensor are sensors that measure movements of direct operation targets such as a steering wheel, an accelerator, a brake, and a shift lever. Examples of the sub-sensor include a sensor that measures an object inside the vehicle other than the direct operation targets, such as vibration and acceleration of the vehicle, or a movement of a body, and a sensor that measures an external environment of the vehicle, such as a GPS or a camera.
The main operation targets are the steering wheel, the accelerator, the brake, and the like. Examples of a plurality of pieces of information in the skill acquisition operation include how to turn the steering wheel, how to depress the accelerator, and how to depress the brake. Examples of the feature amount acquired from the detection results of the sensors include a difference between the timing of turning the steering wheel and the timing of stepping on the brake, timing of a line-of-sight movement/posture change at the time of a curve, and a relationship between a curvature of the curve and acceleration of a vehicle body.
Another example of the other operation is a golf swing. For example, description in a nested data format (data structure) as follows is possible.

Swing

    -> Swing process (take-back, swinging down, and follow-through)
    -> Movement of a club head
    -> Way of using a body

According to the nested description as described above, for example, the following analysis
this golfer does not hit a driver straight

    -> When checked with a camera, it seems that a way of performing the take-back is unsteady every time
    -> When a movement of the club head is checked with motion capture, a way of lifting is not smooth
    -> This is because movements of an elbow and a shoulder joint is not coordinated

becomes possible.
An example of the main sensor is a sensor that measures a movement of a direct operation target, such as velocity or acceleration of a club head. Examples of the sub-sensor include a sensor that measures an object other than the direct operation target, such as a movement of a body, and a sensor that measures an external environment such as weather and a wind direction.
An example of the main operation target is a golf club. Examples of a plurality of pieces of information in the skill acquisition operation include an acceleration profile of the club head, a way of opening of an impact surface, and the like. Examples of feature amounts acquired from the detection results of the sensors include angles of an elbow and a shoulder at a peak of the take-back, timing at which the waist and the shoulder joint start moving, and the like.
A part of functions of the information processing device 2 may be realized by an external device. For example, some or all of the functions of the acquisition unit 22, the storage unit 23, and the processing unit 24 of the information processing device 2 may be realized in an external server device or the like capable of communicating with the information processing device 2. Such an external server device may also be a component of the information processing device 2.

3. Examples of effects

The technique described above is specified as follows, for example. One of the disclosed techniques is the information processing device 2. As described with reference to FIG. 1, FIG. 2, FIG. 8 to FIG. 15, and FIG. 22 to FIG. 26, and the like, the information processing device 2 includes the acquisition unit 22 that acquires the detection results of the plurality of sensors 1 that detects the skill acquisition operation, and the processing unit 24 that processes the detection results of the plurality of sensors 1 which results are acquired by the acquisition unit 22. The plurality of sensors 1 includes the main sensor 11 that detects a state of a main operation target in the skill acquisition operation. The processing by the processing unit 24 includes extracting a plurality of pieces of information in the skill acquisition operation on the basis of the detection result of the main sensor 11, calculating a feature amount acquired from the detection results of the plurality of sensors 1 in the generation period of each of the plurality of pieces of extracted information, and generating the data 23b in which the detection results of the plurality of sensors 1 and the calculated feature amount are organized and described for each of the plurality of pieces of extracted information.
According to the information processing device 2 described above, the data 23b in which the detection results of the plurality of sensors 1 and the feature amounts are organized and described for each of the plurality of pieces of information is generated. As a result, it becomes possible to organize and easily utilize information useful for skill acquisition support.
As described with reference to FIG. 1, FIG. 8 to FIG. 10, FIG. 16 to FIG. 21, and the like, the plurality of pieces of information may include single motion information that is information of a single motion, simultaneous motion information that is information including a plurality of single motions simultaneously performed, and continuous motion information that is information including a plurality of single motions continuously performed, and the extraction of the plurality of pieces of information by the processing unit 24 may include extracting the single motion information on the basis of the detection result of the main sensor 11, and extracting the simultaneous motion information and the continuous motion information on the basis of the detection result of the main sensor 11 in a generation period of each of the plurality of pieces of extracted single motion information. As a result, the information is organized for each of the single motion information, the simultaneous motion information, and the continuous motion information, and utilization thereof becomes easier. Note that the continuous motion information may be information including a plurality of single motions performed continuously and simultaneous motions (corresponding to continuous key strokes of a chord, for example).
As described with reference to FIG. 1, FIG. 8 to FIG. 10, FIG. 16 to FIG. 21, and the like, the skill acquisition operation may be music performance, the single motion information may be a single sound, the simultaneous motion information may be a chord, and the continuous motion information may be continuous sounds. In that case, the skill acquisition operation may be piano performance, the main sensor 11 may be the keyboard sensor 11a, and the state of the main operation target in the skill acquisition operation may be the movement amount of each key of the keyboard of the piano P. The extraction of the plurality of pieces of information by the processing unit 24 may include extracting a single sound on the basis of the detection result of the keyboard sensor 11a; and extracting a chord and continuous sounds on the basis of a comparison result of time-series data of the keyboard movement amount of each of the plurality of extracted single sounds. As a result, information useful for supporting skill improvement in music performance, more specifically, piano performance is organized, and utilization thereof becomes easier.
As described with reference to FIG. 12 and the like, the feature amounts may include a feature amount of a single sound, and the feature amount of the single sound may include at least one of peak key stroke velocity, key stroke velocity peak timing, peak key release velocity, key release velocity peak timing, velocity at the time of escapement passage, escapement passing timing, mute passing timing, a maximum movement amount of a keyboard, pressing time, low contact timing, resistance release timing, touch noise, or bottom noise. For example, by calculating such a feature amount of a single sound, various problems in the piano performance can be grasped.
As described with reference to FIG. 14 and the like, the feature amounts may include a feature amount of a chord, and the feature amount of the chord may include at least one of a variation in key stroke timing (onset), a variation in key release timing (offset), a variation in escapement passing timing, a variation in velocity at the time of escapement passage, a variation in mute passing timing, a variation in velocity at the time of mute passage, or a variation in peak key stroke velocity. For example, by calculating such a feature amount of the chord, various problems in the piano performance can be grasped.
As described with reference to FIG. 15 and the like, the feature amounts may include a feature amount of continuous sounds, and the feature amount of the continuous sounds may include at least one of a performance tempo, a variation in a sound length, agogik, dynamik, or legato. For example, by calculating such a feature amount of the continuous sounds, various problems in the piano performance can be grasped.
As described with reference to FIG. 8, FIG. 27 to FIG. 38, and the like, the information processing device 2 may further include the user interface unit 21 that presents the feature amount calculated by the processing unit 24. In that case, the user interface unit 21 presents the detection result of the keyboard sensor 11a and the feature amount in association with each other. The user interface unit 21 may present the feature amount corresponding to the selection, and the selection may include at least one of selection of an operation range in a main operation target, selection of a time range in skill acquisition operation, selection of time in the skill acquisition operation, or selection of lesson information. For example, the data 23b can be utilized by such presentation of the feature amount by the user interface unit 21.

As described with reference to FIG. 34 and FIG. 35 and the like, the user interface unit 21 may present the comparison result between the data 23b and the reference data 23c. The user interface unit 21 displays an alert indicating a portion in which the similarity between the data 23b and the reference data 23c is distant. The data 23b can also be used for such comparison and similarity determination. By utilization of the data 23b in which the feature amounts are organized and described for each of the plurality of pieces of information, comparison with the reference data 23c and determination of similarity can be easily performed.

As described with reference to FIG. 2 and the like, the plurality of sensors 1 may further include the sub-sensor 12, and the sub-sensor 12 may include at least one of the sound collection sensor 12a, the imaging sensor 12b, the finger sensor 12c, or the body sensor 12d that detects a state of a portion other than the fingers in the body. For example, the detection results of the plurality of sensors 1 including such a sub-sensor 12 are organized, and the utilization thereof becomes easy.

The information processing method described with reference to FIG. 39 and the like is also one of the disclosed techniques. The information processing method includes acquiring the detection results of the plurality of sensors 1 that detects the skill acquisition operation (Step S1), and processing the acquired detection results of the plurality of sensors 1 (Step S2 to S8). The plurality of sensors 1 includes the main sensor 11 that detects a state of a main operation target in the skill acquisition operation. The processing includes extracting a plurality of pieces of information in the skill acquisition operation on the basis of the detection result of the main sensor 11 (Step S4 and S5), calculating feature amounts acquired from the detection results of the plurality of sensors 1 in a generation period of each of the plurality of pieces of extracted information (Step S4 to S6), and generating the data 23b in which the detection results of the plurality of sensors 1 and the calculated feature amounts are organized and described for each of the plurality of pieces of extracted information (Step S7). Also by such an information processing method, as described above, it is possible to organize and easily utilize information useful for skill acquisition support.

The information processing system 100 described with reference to FIG. 1 and the like is also one of the disclosed techniques. The information processing system 100 includes the plurality of sensors 1 that detects the skill acquisition operation, and the information processing device 2 that processes the detection results of the plurality of sensors 1. The plurality of sensors 1 includes the main sensor 11 that detects a state of a main operation target in the skill acquisition operation. Processing by the information processing device 2 includes extracting a plurality of pieces of information in the skill acquisition operation on the basis of the detection result of the main sensor 11, calculating feature amounts acquired from the detection results of the plurality of sensors 1 in a generation period of each of the plurality of pieces of extracted information, and generating data in which the detection results of the plurality of sensors 1 and the calculated feature amounts are organized and described for each of the plurality of pieces of extracted information. Also by such an information processing system 100, as described above, it is possible to organize and easily utilize information useful for skill acquisition support.

Note that the effects described in the present disclosure are merely examples and are not limited to the disclosed contents. There may be other effects.

Although embodiments of the present disclosure have been described above, the technical scope of the present disclosure is not limited to the above-described embodiments as they are, and various modifications can be made within the spirit and scope of the present disclosure. In addition, components of different embodiments and modification examples may be arbitrarily combined.

Note that the present technology can also have the following configurations.

(1) An information processing device including:

an acquisition unit that acquires detection results of a plurality of sensors that detects skill acquisition operation; and
a processing unit that process the detection results of the plurality of sensors which results are acquired by the acquisition unit, in which
the plurality of sensors includes a main sensor that detects a state of a main operation target in the skill acquisition operation, and
the processing by the processing unit includes
extracting a plurality of pieces of information in the skill acquisition operation on the basis of a detection result of the main sensor,
calculating feature amounts acquired from the detection results of the plurality of sensors in a generation period of each of the plurality of pieces of extracted information, and

generating data in which the detection results of the plurality of sensors and the calculated feature amounts are organized and described for each of the plurality of pieces of extracted information.

(2) The information processing device according to (1), in which

the plurality of pieces of information includes
single motion information that is information of a single motion,
simultaneous motion information that is information including a plurality of the single motions performed simultaneously, and
continuous motion information that is information including a plurality of the single motions performed continuously, and
the extraction of the plurality of pieces of information by the processing unit includes
extracting the single motion information on the basis of the detection result of the main sensor, and
extracting the simultaneous motion information and the continuous motion information on the basis of the detection result of the main sensor in a generation period of each of the plurality of pieces of extracted single motion information.

(3) The information processing device according (2), in which

the skill acquisition operation is music performance,
the single motion information is a single sound,
the simultaneous motion information is a chord, and
the continuous motion information is continuous sounds.

(4) The information processing device according to (3), in which the skill acquisition operation is piano performance,

the main sensor is a keyboard sensor, and
the state of the main operation target in the skill acquisition operation is a movement amount of each key of a keyboard of a piano.

(5) The information processing device according to (4), in which

the extraction of the plurality of pieces of information by the processing unit includes
extracting the single sound on the basis of a detection result of the keyboard sensor, and
extracting the chord and the continuous sounds on the basis of a comparison result of time-series data of the keyboard movement amounts of a plurality of the extracted single sounds.

(6) The information processing device according to (4) or (5), in which

the feature amounts include a feature amount of the single sound, and
the feature amount of the single sound includes
at least one of
peak key stroke velocity,
key stroke velocity peak timing,
peak key release velocity,
key release velocity peak timing,
velocity at the time of escapement passage,
escapement passing timing,
mute passing timing,
a maximum movement amount of the keyboard,
a pressing time,
low contact timing,
resistance release timing,
touch noise, or
bottom noise.

(7) The information processing device according to any one of (4) to (6), in which

the feature amounts include a feature amount of the chord, and
the feature amount of the chord includes
at least one of
a variation in key stroke timing,
a variation in key release timing,
a variation in escapement passing timing,
a variation in velocity at the time of escapement passage,
a variation in mute passing timing,
a variation in velocity at the time of mute passage, or
a variation in peak key stroke velocity.

(8) The information processing device according to any one of (4) to (7), in which

the feature amounts include a feature amount of the continuous sounds, and
the feature amount of the continuous sounds includes
at least one of
a performance tempo,
a variation in a sound length,
agogik,
dynamik, or
legato.

(9) The information processing device according to any one of (1) to (8), further including
a user interface unit that presents the feature amounts calculated by the processing unit.
(10) The information processing device according to (9), in which
the user interface unit presents the detection result of the main sensor and the feature amounts in association with
each other.
(11) The information processing device according to (9) or (10), in which

the user interface unit presents the feature amount corresponding to selection, and
the selection includes
at least one of
selection of an operation range in the main operation target,
selection of a time range in the skill acquisition operation,
selection of time in the skill acquisition operation, or
selection of lesson information.

(12) The information processing device according to any one of (9) to (11), in which
the user interface unit presents a comparison result between the data and reference data.
(13) The information processing device according to (12), in which
the user interface unit displays an alert indicating a portion in which similarity between the data and the reference
data is distant.
(14) The information processing device according to any one of (1) to (13), in which

the plurality of sensors further includes a sub-sensor, and
the sub-sensor includes
at least one of
a sound collection sensor,
an imaging sensor,
a finger sensor,
or
a body sensor that detects a state of a portion other than a finger in a body.

(15) An information processing method including:

acquiring detection results of a plurality of sensors that detects skill acquisition operation; and
processing the acquired detection results of the plurality of sensors, in which
the plurality of sensors includes a main sensor that detects a state of a main operation target in the skill acquisition operation, and
the processing includes
extracting a plurality of pieces of information in the skill acquisition operation on the basis of a detection result of the main sensor,
calculating feature amounts acquired from the detection results of the plurality of sensors in a generation period of each of the plurality of pieces of extracted information, and
generating data in which the detection results of the plurality of sensors and the calculated feature amounts are organized and described for each of the plurality of pieces of extracted information.

(16) An information processing system including:

a plurality of sensors that detects skill acquisition operation, and
an information processing device that processes detection results of the plurality of sensors, in which
the plurality of sensors includes a main sensor that detects a state of a main operation target in the skill acquisition operation,
processing by the information processing device includes
extracting a plurality of pieces of information in the skill acquisition operation on the basis of a detection result of the main sensor,
calculating feature amounts acquired from the detection results of the plurality of sensors in a generation period of each of the plurality of pieces of extracted information, and
generating data in which the detection results of the plurality of sensors and the calculated feature amounts are organized and described for each of the plurality of pieces of extracted information.

(17) A data structure of data that is used by an information processing device including a user interface unit and a storage unit, and that is stored in the storage unit, in which
detection results of a plurality of sensors that detects a skill acquisition operation and feature amounts acquired from the detection results of the plurality of sensors are organized and described for each of a plurality of pieces of information in the skill acquisition operation, and the data is used for presentation of the feature amounts by the user interface unit.

(18) The data structure according to (17), in which

the plurality of pieces of information includes
single motion information that is information of a single motion,
simultaneous motion information that is information including a plurality of the single motions performed simultaneously, and
continuous motion information that is information including a plurality of the single motions performed continuously.

(19) The data structure according to (18), in which

the skill acquisition operation is music performance,
the single motion information is a single sound,
the simultaneous motion information is a chord, and
the continuous motion information is continuous sounds.

(20) The data structure according to (19), in which

the feature amounts include a feature amount of the single sound, and
the feature amount of the single sound includes
at least one of
peak key stroke velocity,
key stroke velocity peak timing,
peak key release velocity,
key release velocity peak timing,
velocity at a time of escapement passage,
escapement passing timing,
mute passing timing,
a maximum movement amount of a keyboard,

pressing time,
low contact timing,
resistance release timing,
touch noise, or
bottom noise.

(21) The data structure according to (19) or (20), in which

the feature amounts include a feature amount of the chord, and
the feature amount of the chord includes
at least one of
a variation in key stroke timing,
a variation in key release timing,
a variation in escapement passing timing,
a variation in velocity at a time of escapement passage,
a variation in mute passing timing,
a variation in velocity at a time of mute passage, or
a variation in peak key stroke velocity.

(22) The data structure according to any one of (19) to (21), in which

the feature amounts include a feature amount of the continuous sounds, and
the feature amount of the continuous sounds includes
at least one of
a performance tempo,
a variation in a sound length,
agogik,
dynamik, or
legato.

Reference Signs List

1       PLURALITY OF SENSOR
2       INFORMATION PROCESSING DEVICE
11      MAIN SENSOR
11a     KEYBOARD SENSOR
12      SUB-SENSOR
12a     SOUND COLLECTION SENSOR
12b     IMAGING SENSOR
12c     FINGER SENSOR
12d     BODY SENSOR
12e     PEDAL SENSOR
21      USER INTERFACE UNIT
22      ACQUISITION UNIT
23      STORAGE UNIT
23a     APPLICATION PROGRAM
23b     DATA
23c     REFERENCE DATA
24      PROCESSING UNIT
P       PIANO
U       USER

**Claims**

**1.** An information processing device comprising:

an acquisition unit that acquires detection results of a plurality of sensors that detects skill acquisition operation; and

a processing unit that process the detection results of the plurality of sensors which results are acquired by the acquisition unit, wherein

the plurality of sensors includes a main sensor that detects a state of a main operation target in the skill acquisition operation, and

the processing by the processing unit includes

extracting a plurality of pieces of information in the skill acquisition operation on a basis of a detection result of the main sensor,

calculating a feature amount acquired from the detection results of the plurality of sensors in a generation period of each of the plurality of pieces of extracted information, and

generating data in which the detection results of the plurality of sensors and the calculated feature amounts are organized and described for each of the plurality of pieces of extracted information.

2. The information processing device according to claim 1, wherein

the plurality of pieces of information includes
single motion information that is information of a single motion,
simultaneous motion information that is information including a plurality of the single motions performed simultaneously, and
continuous motion information that is information including a plurality of the single motions performed continuously, and
the extraction of the plurality of pieces of information by the processing unit includes
extracting the single motion information on a basis of the detection result of the main sensor, and
extracting the simultaneous motion information and the continuous motion information on a basis of the detection result of the main sensor in a generation period of each of a plurality of pieces of the extracted single motion information.

3. The information processing device according claim 2, wherein

the skill acquisition operation is music performance,
the single motion information is a single sound,
the simultaneous motion information is a chord, and
the continuous motion information is continuous sounds.

4. The information processing device according to claim 3, wherein the skill acquisition operation is piano performance,

the main sensor is a keyboard sensor, and
a state of the main operation target in the skill acquisition operation is a movement amount of each key of a keyboard of a piano.

5. The information processing device according to claim 4, wherein

the extraction of the plurality of pieces of information by the processing unit includes
extracting the single sound on a basis of a detection result of the keyboard sensor, and
extracting the chord and the continuous sound on a basis of a comparison result of time-series data of a keyboard movement amount of each of a plurality of the extracted single sounds.

6. The information processing device according to claim 4, wherein

the feature amounts include a feature amount of the single sound, and
the feature amount of the single sound includes
at least one of
peak key stroke velocity,
key stroke velocity peak timing,
peak key release velocity,
key release velocity peak timing,
velocity at a time of escapement passage,

escapement passing timing,
mute passing timing,
a maximum movement amount of the keyboard,
pressing time,
low contact timing,
resistance release timing,
touch noise, or
bottom noise.

7. The information processing device according to claim 4, wherein the feature amounts include a feature amount of the chord, and the feature amount of the chord includes

at least one of
a variation in key stroke timing,
a variation in key release timing,
a variation in escapement passing timing,
a variation in velocity at a time of escapement passage,
a variation in mute passing timing,
a variation in velocity at a time of mute passage, or
a variation in peak key stroke velocity.

8. The information processing device according to claim 4, wherein

the feature amounts include a feature amount of the continuous sound, and
the feature amount of the continuous sound includes
at least one of
a performance tempo,
a variation in a sound length,
agogik,
dynamik, or
legato.

9. The information processing device according to claim 1, further comprising
a user interface unit that presents the feature amounts calculated by the processing unit.

10. The information processing device according to claim 9, wherein
the user interface unit presents the detection result of the main sensor and the feature amounts in association with each other.

11. The information processing device according to claim 9, wherein

the user interface unit presents the feature amounts corresponding to selection, and
the selection includes
at least one of
selection of an operation range in the main operation target,
selection of a time range in the skill acquisition operation,
selection of time in the skill acquisition operation, or
selection of lesson information.

12. The information processing device according to claim 9, wherein the user interface unit presents a comparison result between the data and reference data.

13. The information processing device according to claim 12, wherein
the user interface unit displays an alert indicating a portion in which similarity between the data and the reference data is distant.

14. The information processing device according to claim 1, wherein

the plurality of sensors further includes a sub-sensor, and
the sub-sensor includes at least one of
a sound collection sensor,
an imaging sensor,
a finger sensor,
or
a body sensor that detects a state of a portion other than a finger in a body.

15. An information processing method comprising:

acquiring detection results of a plurality of sensors that detects skill acquisition operation; and
processing the acquired detection results of the plurality of sensors, wherein
the plurality of sensors includes a main sensor that detects a state of a main operation target in the skill acquisition operation, and
the processing includes
extracting a plurality of pieces of information in the skill acquisition operation on a basis of a detection result of the main sensor,
calculating feature amounts acquired from the detection results of the plurality of sensors in a generation period of each of the plurality of pieces of extracted information, and
generating data in which the detection results of the plurality of sensors and the calculated feature amounts are organized and described for each of the plurality of pieces of extracted information.

16. An information processing system comprising:

a plurality of sensors that detects skill acquisition operation, and
an information processing device that processes detection results of the plurality of sensors, wherein
the plurality of sensors includes a main sensor that detects a state of a main operation target in the skill acquisition operation, and
the processing by the information processing device includes
extracting a plurality of pieces of information in the skill acquisition operation on a basis of a detection result of the main sensor,
calculating feature amounts acquired from the detection results of the plurality of sensors in a generation period of each of the plurality of pieces of extracted information, and
generating data in which the detection results of the plurality of sensors and the calculated feature amounts are organized and described for each of the plurality of pieces of extracted information.

# FIG.1

100

PLURALITY OF SENSORS

1

2

U

P

# FIG.2

PLURALITY OF SENSORS — 1

MAIN SENSOR — 11

KEYBOARD SENSOR — 11a

SUB-SENSOR — 12

SOUND COLLECTION SENSOR — 12a

IMAGING SENSOR — 12b

FINGER SENSOR — 12c

BODY SENSOR — 12d

PEDAL SENSOR — 12e

# FIG.3

11a

# FIG.4

12a

# FIG.5

12b

# FIG.6

12c

# FIG.7

12d

# FIG.8

```
INFORMATION PROCESSING DEVICE                    2

    USER INTERFACE          21        STORAGE UNIT       23
    UNIT
                                          APPLICATION    23a
    ACQUISITION             22           PROGRAM
    UNIT
                                          DATA           23b
    PROCESSING             24
    UNIT                                  REFERENCE       23c
                                          DATA
```

# FIG.9

11a

t1 (onset)　t2 (offset)　t3 (onset)　t5 (offset)　t7 (onset)　t8 (offset)

t4 (onset)　t6 (offset)

t

EP 4 398 221 A1

# FIG.10

noteA

onset: 100
offset: 200
peak_vel: 400

noteB

onset: 320
offset: 420
peak_vel: 300

noteC

onset: 340
offset: 450
peak_vel: 350

noteD

onset: 400
offset: 500
peak_vel: 410

# FIG.11

**phraseA**

noteA
onset: 100
offset: 200
peak_vel: 400

**chordA**

noteB
onset: 320
offset: 420
peak_vel: 300

noteC
onset: 340
offset: 450
peak_vel: 350

onset: 320,  offset: 450,  vel_uniformity: 0.7

noteD
onset: 400
offset: 500
peak_vel: 410

onset: 100,  offset: 500,  vel_uniformity: 0.6

# FIG.12

| FEATURE AMOUNT OF SINGLE SOUND | PEAK KEY STROKE VELOCITY (f1) |
|---|---|
| | KEY STROKE VELOCITY PEAK TIMING (f2) |
| | PEAK KEY RELEASE VELOCITY (f3) |
| | KEY RELEASE VELOCITY PEAK TIMING (f4) |
| | VELOCITY AT TIME OF ESCAPEMENT PASSAGE (f5) |
| | ESCAPEMENT PASSING TIMING (f6) |
| | MUTE PASSING TIMING (f7) |
| | MAXIMUM MOVEMENT AMOUNT OF KEYBOARD (f8) |
| | PRESSING TIME (f9) |
| | BOTTOM CONTACT TIMING (f10) |
| | BOTTOM RELEASE TIMING (f11) |
| | TOUCH NOISE (f12) |
| | BOTTOM NOISE (f13) |
| | ... |

# FIG.13

KEYBOARD
MOVEMENT
AMOUNT

f8
z=10mm
x=8mm

y=5mm

f6  f10          f11   f7    t

f9

KEYBOARD
MOVEMENT
AMOUNT

f1
f5

f13

f12 {
f4

f2    t

f3

# FIG.14

| FEATURE AMOUNT OF CHORD | ONSET VARIATION |
|---|---|
| | OFFSET VARIATION |
| | VARIATION IN ESCAPEMENT PASSING TIMING |
| | VARIATION IN VELOCITY AT TIME OF ESCAPEMENT PASSAGE |
| | VARIATION IN MUTE PASSING TIMING |
| | VARIATION IN VELOCITY AT TIME OF MUTE PASSAGE |
| | VARIATION IN PEAK KEY STROKE VELOCITY |
| | ... |

# FIG.15

| FEATURE AMOUNT OF CONTINUOUS SOUND | PERFORMANCE TEMPO |
|---|---|
| | VARIATION IN SOUND LENGTH |
| | AGOGIK |
| | DYNAMIK |
| | LEGATO |
| | ... |

# FIG.16

(A)

⟹35ms

W1  W2

esc1  esc2

(B)

⟹35ms

W1  W2

esc1  esc2

(C)

⟹35ms

W1  W2

esc1
esc2

(D)

⟹35ms

W1  W2

esc1  esc2

EP 4 398 221 A1

# FIG.17

W1

W3

W2

PITCH 10
PITCH 30
PITCH 12

# FIG.18

EP 4 398 221 A1

# FIG.19

# FIG.20

# FIG.21

CONTINUOUS SOUND id    [0,1], [1,2], [3,4], [4,5], [7,8]
CHORD id                           10(=[2,3])

PHRASE SOUND id        11(=[0,1,10,4,5])

# FIG.22

23b

**note**

| | | | |
|---|---|---|---|
| BASIC INFOR-MATION | ID | | 0 |
| | attribute | | "note" |
| | key | | 39 |
| | onset | | 100 |
| | offset | | 500 |
| | samplingRate | | 1000 |
| | components | | null |
| TIME-SERIES DATA | hackkey | data | 0.2, 0.5, 0.8, ,···, 0.2 |
| | | vel | [] |
| | | samplingRate | 1000 |
| | | timeshift | 0 |
| | handPosture | data | {[], [], ···, []} |
| | | samplingRate | 100 |
| | | timeshift | -10 |
| | bodyPosture | data | {[], [], ···, []} |
| | | samplingRate | 100 |
| | | timeshift | 0 |
| FEA-TURE AMOUNT | hackkey | maxDepth | 10.5 |
| | | peakDesVel | 300 |
| | | peakTiming | 40 |
| | | bottomTiming | 50 |
| | handPosture | range | [20, 20, ···, 30] |
| | | peakVel | [0.2, 0.2, ···, 0.3] |
| | sensoryEval | softness | 5 |
| | | brightness | 2 |
| OTHER | pieceInfo | title | Etude op.10-4 |
| | | measure | 15 |
| | | number | 2 |
| | handInfo | hand | right |
| | | fingering | 2 |

**chord**

| | | | |
|---|---|---|---|
| BASIC INFOR-MATION | ID | | 10 |
| | attribute | | "chord" |
| | key | | 39 |
| | onset | | 100 |
| | offset | | 500 |
| | samplingRate | | 1000 |
| | components | | [0, 1, 2] |
| TIME-SERIES DATA | ... | | |
| FEA-TURE AMOUNT | hackkey | peakDesVel | 300 |
| | | onsetShift | [0.1, 0.2] |
| | | offsetShift | [0.2, 0.5] |
| | | loudnessBalance | [1, 1] |
| | handPosture | range | [20, 20, ···, 30] |
| | | peakVel | [0.2, 0.2, ···, 0.3] |
| | sensoryEval | softness | 5 |
| | | brightness | 1 |
| OTHER | ... | | |

**phrase**

| | | | |
|---|---|---|---|
| BASIC INFOR-MATION | ID | | 100 |
| | attribute | | "phrase" |
| | key | | 39 |
| | onset | | 100 |
| | offset | | 500 |
| | samplingRate | | 1000 |
| | components | | [10, 3, 4] |
| TIME-SERIES DATA | ... | | |
| FEA-TURE AMOUNT | hackkey | peakDesVel | 300 |
| | | legato | [0.4, 0.4] |
| | | phrasing | [1.0, 1.1, 1.2] |
| | | dynamic | [1, 1, 0.8] |
| | handPosture | range | [20, 20, ···, 30] |
| | | peakVel | [0.2, 0.2, ···, 0.3] |
| | sensoryEval | softness | 5 |
| | | brightness | 1 |
| OTHER | ... | | |

EP 4 398 221 A1

# FIG.23

| |
|---|
| Press depth |
| Press speed |
| Touch interval |
| Depression duration |
| Legato |
| Release speed |
| Press acceleration |
| Touch - pedal release interval |
| ... |

# FIG.24

Touch interval     Touch interval     Touch interval

# FIG.25

Legato        Legato

# FIG.26

━━━ Hackkey
─── Pedal

Touch-Pedal release interval

# FIG.27

| PRESS DEPTH | PRESS SPEED | PRESS ACCELERATION | RELEASE SPEED | TOUCH INTERVAL | LEGATO | DEPRESSION DURATION |
|---|---|---|---|---|---|---|

# FIG.28

| PRESS DEPTH | PRESS SPEED | PRESS ACCELERATION | RELEASE SPEED | TOUCH INTERVAL | LEGATO | DEPRESSION DURATION |
|---|---|---|---|---|---|---|

EP 4 398 221 A1

# FIG.29

EP 4 398 221 A1

FIG.30

**FIG.31**

# FIG.32

(A)

00:04:21/00:50:21

3D Touch | 2D Touch | Posture

Press depth

Ave: ○○  Std: ○○

(B)

00:04:21/00:50:21

3D Touch | 2D Touch | Posture

Press depth

Ave: ○○  Std: ○○

Press Speed

Ave: ○○  Std: ○○

# FIG.33

(A)

(B)

# FIG.34

(A)

(B)

# FIG.35

# FIG.36

# FIG.37

(A)

(B)

# FIG.38

# FIG.39

```
                        ┌──────────┐
                        │  START   │
                        └──────────┘
                             │
                             ▼
        ┌────────────────────────────────────┐
        │   ACQUIRE DETECTION RESULT OF       │ ～S1
        │      PLURALITY OF SENSORS           │
        └────────────────────────────────────┘
                             │
                             ▼
        ┌────────────────────────────────────┐
        │      EXECUTE PREPROCESSING          │ ～S2
        └────────────────────────────────────┘
                             │
                             ▼
        ┌────────────────────────────────────┐
        │   EXTRACT onset AND offset ON BASIS OF │ ～S3
        │   DETECTION RESULT OF MAIN SENSOR   │
        └────────────────────────────────────┘
                             │
                             ▼
        ┌────────────────────────────────────┐
        │   EXTRACT SINGLE SOUND AND CALCULATE │
        │ FEATURE AMOUNT ON BASIS OF DETECTION │ ～S4
        │       RESULT OF MAIN SENSOR         │
        └────────────────────────────────────┘
                             │
                             ▼
        ┌────────────────────────────────────┐
        │    EXTRACT CHORD AND CONTINUOUS     │
        │    SOUNDS AND CALCULATE FEATURE     │ ～S5
        │ AMOUNT ON BASIS OF DETECTION RESULT │
        │        OF MAIN SENSOR               │
        └────────────────────────────────────┘
                             │
                             ▼
        ┌────────────────────────────────────┐
        │ CALCULATE FEATURE AMOUNT ON BASIS   │ ～S6
        │ OF DETECTION RESULT OF SUB-SENSOR   │
        └────────────────────────────────────┘
                             │
                             ▼
        ┌────────────────────────────────────┐
        │         GENERATE DATA               │ ～S7
        └────────────────────────────────────┘
                             │
                             ▼
        ┌────────────────────────────────────┐
        │         UTILIZE DATA                │ ～S8
        └────────────────────────────────────┘
                             │
                             ▼
                        ┌──────────┐
                        │   END    │
                        └──────────┘
```

FIG.40

| **INTERNATIONAL SEARCH REPORT** | International application No. |
|---|---|
| | **PCT/JP2022/013344** |

**A.    CLASSIFICATION OF SUBJECT MATTER**

*G09B 15/00*(2006.01)i; *G10G 1/00*(2006.01)i; *G10H 1/00*(2006.01)i
FI:    G09B15/00 Z; G10H1/00 Z; G10G1/00

According to International Patent Classification (IPC) or to both national classification and IPC

**B.    FIELDS SEARCHED**

Minimum documentation searched (classification system followed by classification symbols)

G09B15/00; G10G1/00; G10H1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/071149 A1 (SONY GROUP CORP.) 09 April 2020 (2020-04-09) paragraphs [0010]-[0164], fig. 1-19 | 1-10, 12-16 |
| Y | | 11 |
| Y | JP 2009-48044 A (CASIO COMPUTER CO., LTD.) 05 March 2009 (2009-03-05) paragraphs [0019]-[0080], fig. 1-19 | 11 |
| A | JP 2019-61006 A (KAWAI MUSICAL INSTRUMENT MFG. CO., LTD.) 18 April 2019 (2019-04-18) entire text, all drawings | 1-16 |
| A | JP 2007-286087 A (KAWAI MUSICAL INSTRUMENT MFG. CO., LTD.) 01 November 2007 (2007-11-01) entire text, all drawings | 1-16 |
| A | JP 2002-91290 A (YAMAHA CORP.) 27 March 2002 (2002-03-27) entire text, all drawings | 1-16 |

☐ Further documents are listed in the continuation of Box C.    ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/013344**

| Patent document cited in search report | | | Publication date (day/month/year) | Patent family member(s) | Publication date (day/month/year) |
|---|---|---|---|---|---|
| WO | 2020/071149 | A1 | 09 April 2020 | US 2021/0350773 A1 paragraphs [0052]-[0194], fig. 1-19 EP 3863001 A1 CN 112805765 A KR 10-2021-0070270 A | |
| JP | 2009-48044 | A | 05 March 2009 | (Family: none) | |
| JP | 2019-61006 | A | 18 April 2019 | (Family: none) | |
| JP | 2007-286087 | A | 01 November 2007 | (Family: none) | |
| JP | 2002-91290 | A | 27 March 2002 | (Family: none) | |

Form PCT/ISA/210 (patent family annex) (January 2015)

## REFERENCES CITED IN THE DESCRIPTION

**Patent documents cited in the description**

- JP 2019061006 A